# EUROPEAN PATENT APPLICATION

(11) **EP 1 587 083 A1**
(43) Date of publication of application: **19.10.2005**
(21) Application number: 03786327.1
(22) Date of filing: 25.12.2003
(51) Int. Cl.: G11B 7/09

(54) **INFORMATION RECORDING MEDIUM AND INFORMATION RECORDING DEVICE**

(30) Priority: 22.01.2003 JP 2003013615
(71) Applicant: Pioneer Corporation, Tokyo 153-8654 (JP)
(72) Inventor: YANAGAWA, Naoharu; c/o Pioneer Corporation, Tokorozawa-shi, Saitama 359-0047 (JP); YONE, Tatsuhiro; c/o Pioneer Corporation, Tokorozawa-shi, Saitama 359-0047 (JP); KATO, Masahiro; c/o Pioneer Corporation, Tokorozawa-shi, Saitama 359-0047 (JP); SHIROTA, Akira; c/o Pioneer Corporation, Tokorozawa-shi, Saitama 359-0047 (JP); HORIKAWA, Kunihiko; c/o Pioneer Corporation, Tokorozawa-shi, Saitama 359-0047 (JP); MURAMATSU, Eiji; c/o Pioneer Corporation, Tokorozawa-shi, Saitama 359-0047 (JP)
(74) Representative: Tappe, Hartmut
(86) International application number: PCT/JP2003/016811
(87) International publication number: WO 2004/066289

(57) **Abstract**

A tracking servo control device for making a tracking servo control to apply a light beam onto a groove track on a recording medium where the groove track and a pre-pit are preformed, is provided with: a first generation device which generates a first regenerative signal based on a reflected light from the recording medium when at least a part of the pre-pit is formed within a radiation range of the light beam onto the groove track; a second generation device which generates a second regenerative signal based on a reflected light from the recording medium when the pre-pit is formed outside the radiation range of the light beam; and a calculation device which calculates an offset value in the tracking servo control based on the first regenerative signal and the second regenerative signal that are generated.

## Description

### BACKGROUND OF THE INVENTION

### 1.Field of the Invention

The present invention relates to a tracking servo control device, a tracking servo control method and a tracking servo control program.

### 2. Related Art

Some recording optical disks have LPPs (Land Pre-pits) on the land track, which are preformed to generate address signals. Among such optical disks an optical disk has LPPs that are formed by deformation of groove, as disclosed in Patent Document 1 (Document 1; Japanese Patent Laid-Open No. 2002-56542). Another optical disk has LPPs that are formed across adjacent grooves, as disclosed in Patent Document 2(Document 2; Japanese Patent Laid-Open No. 2000-195058).

In such different optical disks, information pits may be formed near the LPP, or the information pits recorded near the LPP may be used for reproduction.

A known method for detecting the position of information pit read erroneously as a regenerative signal on the optical disk performs error detection/correction by using an ECC block as disclosed in Patent Document 3 (Document 3; Japanese Patent Laid-Open No. 2002-202919).

### SUMMARY OF THE INVENTION

In the related art as described above, when the LPP is within a radiation area of light beam, a correct regenerative signal might not be obtained when reproducing the information pits, because the tracking offset value was constant.

It is an object of the invention to provide a tracking servo control device, a tracking servo control method, a tracking servo control program and a tracking servo control information recording medium in which a tracking offset value is set up to obtain a correct regenerative signal in an optical disk having the LPPs and groove tracks.

The above object of the present invention can be achieved by a tracking servo control device of the present invention. The tracking servo control device for making a tracking servo control to apply a light beam onto a groove track on a recording medium where the groove track and a pre-pit are preformed, is provided with: a first generation device which generates a first regenerative signal based on a reflected light from the recording medium when at least a part of the pre-pit is formed within a radiation range of the light beam onto the groove track; a second generation device which generates a second regenerative signal based on a reflected light from the recording medium when the pre-pit is formed outside the radiation range of the light beam; and a calculation device which calculates an offset value in the tracking servo control based on the first regenerative signal and the second regenerative signal that are generated.

According to the present invention, the tracking offset value is changed using the regenerative signal based on the reflected light of light beam from the optical disk when at least one part of the LPP is formed in the radiation range of light beam, and the regenerative signal based on the reflected light when the LPP is formed outside the radiation range, whereby the tracking servo control device in which the regenerative signal has the least occurrence number of errors is constituted.

In one aspect of the present invention can be achieved by the tracking servo control device of the present invention. The tracking servo control device of the present invention is, wherein the calculation device calculates the offset value so that a difference between the amplitude value of the first regenerative signal and the amplitude value of the second regenerative signal is minimized.

According to the present invention, the tracking offset value is changed to have the least variation in the amplitude between the regenerative signal based on the reflected light of light beam from the optical disk when at least one part of the LPP is formed in the radiation range of light beam and the regenerative signal based on the reflected light when the LPP is formed outside the radiation area, whereby the tracking servo control device in which the regenerative signal has the least occurrence number of errors is constituted, employing the tracking offset value.

In another aspect of the present invention can be achieved by the tracking servo control device of the present invention. The tracking servo control device of the present invention is, wherein the calculation device calculates the offset value so that a difference between the lower peak value of the first regenerative signal and the lower peak value of the second regenerative signal is minimized.

According to the present invention, the tracking offset value is changed to have the least variation in the bottom value between the regenerative signal based on the reflected light of light beam from the optical disk when at least one part of the LPP is formed in the radiation range of light beam and the regenerative signal based on the reflected light when the LPP is formed outside the radiation area, whereby the tracking servo control device in which the regenerative signal has the least occurrence number of errors in is constituted.

In further aspect of the present invention can be achieved by the tracking servo control device of the present invention. The tracking servo control device of the present invention is, wherein the calculation device calculates the offset value so that a difference between the upper peak value of the first regenerative signal and the upper peak value of the second regenerative signal is minimized.

According to the present invention, the tracking offset value is changed to have the least variation in the bottom and peak values between the regenerative signal based on the reflected light of light beam from the optical disk when at least one part of the LPP is formed in the radiation range of light beam and the regenerative signal based on the reflected light when the LPP is formed outside the radiation area, whereby the tracking servo control device in which the regenerative signal has the least occurrence number of errors when the amplitude of the regenerative signal is not changed is constituted.

In further aspect of the present invention can be achieved by the tracking servo control device of the present invention. The tracking servo control device of the present invention is, wherein the calculation device calculates the offset value so that the sum of an error count of information obtained from the first regenerative signal and an error count of information obtained from the second regenerative signal is minimized.

According to the present invention, the tracking offset value is changed to have the least sum of the number of errors occurring in the regenerative signal based on the reflected light of light beam from the optical disk when at least one part of the LPP is formed in the radiation range of light beam and the number of errors occurring in the regenerative signal based on the reflected light when the LPP is formed outside the radiation range, whereby the tracking servo control device in which the regenerative signal has the least occurrence number of errors is constituted, employing the tracking offset value.

The above object of the present invention can be achieved by a tracking servo control device of the present invention. The tracking servo control device for making a tracking servo control to apply a light beam onto a groove track on a recording medium where the groove track and a pre-pit are preformed, is provided with: a first generation device which generates a first regenerative signal based on a reflected light from the recording medium when at least a part of the pre-pit adjacent to the information pit in one direction is formed within a radiation range of the light beam onto the groove track; a second generation device which generates a second regenerative signal based on a reflected light from the recording medium when at least a part of the pre-pit adjacent to the information pit in another direction is formed within the radiation range of the light beam; and a calculation device which calculates an offset value in the tracking servo control based on the first regenerative signal and the second regenerative signal that are generated.

According to the present invention, the tracking offset value is changed, employing the regenerative signal based on the reflected light from the optical disk when at least one part of the LPP adjacent to the information pit in one direction is formed in the radiation area of light beam, and the regenerative signal based on the reflected light from the optical disk when at least one part of the LPP adjacent to information pit in the other direction is formed, whereby the tracking servo control device in which the regenerative signal has the least occurrence number of errors is constituted.

In one aspect of the present invention can be achieved by the tracking servo control device of the present invention. The tracking servo control device of the present invention is, wherein the calculation device calculates the offset value so that a difference between the amplitude value of the first regenerative signal and the amplitude value of the second regenerative signal is minimized.

According to the present invention, the tracking offset value is changed to have the least variation in the amplitude between the regenerative signal based on the reflected light of light beam from the optical disk when at least one part of the LPP adjacent to the information pit in one direction is formed in the radiation range of light beam and the regenerative signal based on the reflected light from the optical disk when at least one of the LPP adjacent in the other direction is formed, whereby the tracking servo control device in which the regenerative signal is associated wit the least occurrence number of errors is constituted, employing the tracking offset value.

In another aspect of the present invention can be achieved by the tracking servo control device of the present invention. The tracking servo control device of the present invention is further provided with a third generation device for generating a third regenerative signal based on a reflected light from the recording medium for the light beam when the pre-pit is formed outside the radiation range of the light beam, wherein the control device calculates the offset value so that a difference between the upper peak value of the third regenerative signal and an average value of the upper peak value of the first regenerative signal and the upper peak value of the second regenerative signal is minimized.

According to the present invention, the tracking offset value is set up so that the average value of the variation amount in the peak value between the regenerative signal based on the reflected light of light beam from the optical disk when at least one part of the LPP adjacent to the information pit in one direction is formed in the radiation range of light beam and the regenerative signal based on the reflected light from the optical disk when at least one part of the LPP adjacent in the other direction is formed may be the smallest with respect to the peak value of the regenerative signal in the case of not containing the LPP within the radiation range of light beam, whereby the tracking servo control device in which the regenerative signal has the least occurrence number of errors is constituted.

In further aspect of the present invention can be achieved by the tracking servo control device of the present invention. The tracking servo control device of the present invention is further provided with a third generation device for generating a third regenerative signal based on a reflected light from the recording medium for the light beam when the pre-pit is formed outside the radiation range of the light beam, wherein the calculation device calculates the offset value so that a difference between the lower peak value of the third regenerative signal and an average value of the lower peak value of the first regenerative signal and the lower peak value of the second regenerative signal is minimized.

According to the present invention, the tracking offset value is set up so that the average value of the variation amount in the peak and bottom values between the regenerative signal based on the reflected light of light beam from the optical disk when at least one part of the LPP adjacent to the information pit in one direction is formed in the radiation range of light beam and the regenerative signal based on the reflected light from the optical disk when at least one part of the LPP adjacent in the other direction is formed may be the smallest with respect to the peak and bottom values of the regenerative signal in the case of not containing the LPP in the radiation range of light beam, whereby the tracking servo control device in which the regenerative signal has the least occurrence number of errors is constituted.

In further aspect of the present invention can be achieved by the tracking servo control device of the present invention. The tracking servo control device of the present invention is, wherein the calculation device calculates the offset value so that a difference between the lower peak value of the third regenerative signal and an average value of the lower peak value of the first regenerative signal and the lower peak value of the second regenerative signal is minimized.

According to the present invention, the tracking offset value is set up so that the average value of the variation amount in the peak and bottom values between the regenerative signal based on the reflected light of light beam from the optical disk when at least one part of the LPP adjacent to the information pit in one direction is formed in the radiation range of light beam and the regenerative signal based on the reflected light from the optical disk when at least one part of the LPP adjacent in the other direction is formed may be the smallest with respect to the peak and bottom values of the regenerative signal in the case of not containing the LPP in the radiation range of light beam, whereby the tracking servo control device in which the regenerative signal has the least occurrence number of errors is constituted.

In further aspect of the present invention can be achieved by the tracking servo control device of the present invention. The tracking servo control device of the present invention is, wherein the calculation device calculates the offset value so that the sum of an error count of data obtained from the first regenerative signal and an error count of data obtained from the second regenerative signal is minimized.

According to the present invention, the tracking offset value is changed to have the least sum of the number of errors occurring in the regenerative signal based on the reflected light of light beam from the optical disk when at least one part of the LPP adj acent to the information pit in one direction is formed in the radiation range of light beam and the number of errors occurring in the regenerative signal based on the reflected light from the optical disk when at least one part of the LPP adjacent in the other direction is formed, whereby the tracking servo control device in which the regenerative signal has the least occurrence number of errors is constituted, employing the tracking offset value.

In further aspect of the present invention can be achieved by the tracking servo control device of the present invention. The tracking servo control device of the present invention is, wherein the calculation of the offset value by the calculation device is made employing the information pits formed in a continuous area where the information pits are formed.

According to the present invention, in the tracking servo control device with this configuration, the optimal tracking offset value is detected at high speed.

In further aspect of the present invention can be achieved by the tracking servo control device of the present invention. The tracking servo control device of the present invention is, wherein the calculation of the offset value by the calculation device is made employing the information pits formed in a linking area of the recording medium.

According to the present invention, the optimal tracking offset is performed and makes the user unaware of the time for detecting the optimal tracking offset value.

In further aspect of the present invention can be achieved by the tracking servo control device of the present invention. The tracking servo control device of the present invention is, wherein the calculation of the offset value by the calculation device is made employing the information pits formed in a preset area for adjusting the light quantity of the light beam.

According to the present invention, when the tracking servo control device is started, the optimal tracking offset value is detected. Also, the optimal tracking offset value is detected, irrespective of whether the write-once medium or the recording medium.

In further aspect of the present invention can be achieved by the tracking servo control device of the present invention. The tracking servo control device of the present invention is, wherein the calculation of the offset value by the calculation device is made employing the information pits formed in one area of the recordingmediumwhere the information pits are formed, the information pits being subjected to an error detection/correction with an error detection/correction code.

According to the present invention, the ECC may be employed to detect the optimal tracking offset value, whereby the optimal tracking offset value is detected with the simpler configuration.

In further aspect of the present invention can be achieved by the tracking servo control device of the present invention. The tracking servo control device of the present invention is, wherein the formation pattern of the information pit is constant.

According to the present invention, since the formation pattern of information pit is constant, the optimal tracking offset value is easily detected.

In further aspect of the present invention can be achieved by the tracking servo control device of the present invention. The tracking servo control device of the present invention is, wherein the information pit is employed for recording the information recorded with an error detection/correction code, and the position of the information pit on the recording medium is specified by the error detection/correction code.

According to the present invention, the information recording dedicated apparatus or the information recording and reproducing apparatus can detect the optimal tracking offset value.

The above object of the present invention can be achieved by a tracking servo control method of the present invention. The tracking servo control method for making a tracking servo control to apply a light beam onto a groove track on a recording medium where the groove track and a pre-pit are preformed, is provided with: a first generation step of generating a first regenerative signal based on a reflected light from the recording medium when at least a part of the pre-pit is formed within a radiation range of the light beam onto the groove track; a second generation step of generating a second regenerative signal based on a reflected light from the recording medium when the pre-pit is formed outside the radiation range of the light beam; and a calculation step of calculating an offset value in the tracking servo control based on the first regenerative signal and the second regenerative signal that are generated.

According to the present invention, the tracking offset value is changed, employing the regenerative signal based on the reflected light from the optical disk when at least one part of the LPP is formed in the radiation area of light beam, and the regenerative signal based on the reflected light when the LPP is formed outside the radiation area, whereby the tracking servo control method in which the regenerative signal has the least occurrence number of errors is provided.

The above object of the present invention can be achieved by a tracking servo control method of the present invention. The tracking servo control method for making a tracking servo control to apply a light beam onto a groove track on a recording medium where the groove track and a pre-pit are preformed, is provided with: a first generation step of generating a first regenerative signal based on a reflected light from the recording medium when at least a part of the pre-pit adjacent to the information pit in one direction is formed within a radiation range of the light beam onto the groove track; a second generation step of generating a second regenerative signal based on a reflected light from the recording medium when the pre-pit adjacent to the information pit in the other direction is formed within the radiation range of the light beam; and a calculation step of calculating an offset value in the tracking servo control based on the first regenerative signal and the second regenerative signal that are generated.

According to the present invention, the tracking offset value is changed, employing the regenerative signal based on the reflected light from the optical disk when at least one part of the LPP adjacent to the information pit in one direction is formed in the radiation area of light beam, and the regenerative signal based on the reflected light from the optical disk when at least one part of the LPP adjacent in the other direction is formed, whereby the tracking servo control method in which the regenerative signal has the least occurrence number of errors is provided.

### BRIEF DESCRIPTION OF THE DRAWINGS

FIG. 1 is a block diagram of an information recording and reproducing apparatus according to a first embodiment;
FIG. 2A is a diagrammatic chart of an RF signal waveform, in which the tracking offset value is -0.086 µm;
FIG. 2B is a diagrammatic chart of an RF signal waveform, in which the tracking offset value is 0 µm in (b);
FIG. 2C is a diagrammatic chart of an RF signal waveform, in which the tracking offset value is +0.086 µm in (c);
FIG. 3A is a view showing the positional relationship between light beam radiation area and the LPP, in which the tracking offset value is -0.086 µm;
FIG. 3B is a view showing the positional relationship between light beam radiation area and the LPP, in which the tracking offset value is 0 µm;
FIG. 3C is a view showing the positional relationship between light beam radiation area and the LPP, in which the tracking offset value is +0.086 µm;
FIG. 4 is a graph representing the relationship between an RF variation amount and the number of PI (Inner Parity) errors;
FIG. 5 is a flowchart for detecting the optimal tracking offset value;
FIG. 6 is a flowchart for detecting the optimal tracking offset value at high speed;
FIG. 7 is a view showing the positional relationship between the LPP and light beam radiation area;
FIG. 8A is a diagrammatic chart showing the relationship between tracking offset value and RF signal waveform, in which the tracking offset value is -0.086 µm;
FIG. 8B is a diagrammatic chart showing the relationship between tracking offset value and RF signal waveform, in which the tracking offset value is 0 µm;
FIG. 8C is a diagrammatic chart showing the relationship between tracking offset value and RF signal waveform, in which and the tracking offset value is +0.086 µm;
FIG. 9 is a view showing the positional relationship between the LPP and light beam radiation area;
FIG. 10A is a chart showing the relationship between tracking offset value and RF signal waveform, in which the tracking offset value is -0.086 µm;
FIG. 10B is a chart showing the relationship between tracking offset value and RF signal waveform, in which, the tracking offset value is 0 µm;
FIG. 10C is a chart showing the relationship between tracking offset value and RF signal waveform, in which and the tracking offset value is +0.086 µm;
FIG. 11 is a graph representing the relationshipbetween RF variation amount and the number of PI errors;
FIG. 12 is a flowchart for detecting the tracking offset value;
FIG. 13 is a block diagram of an information recording and reproducing apparatus according to a third embodiment;
FIG. 14 is a flowchart for detecting the optimal tracking offset value according to the third embodiment;
FIG. 15 is a chart showing the relationship between RF signal Sf, gate signal Sg1, and peak and bottom values in outside LPP according to the third embodiment;
FIG. 16 is a chart showing the relationship between RF signal Sf, gate signal Sg2, peak value and bottom value in inside LPP according to the third embodiment;
FIG. 17 is a diagram of an optimal tracking offset value detection block;
FIG. 18 is a table showing the relationship between tracking offset value and the number of data errors;
FIG. 19A is a graph representing the relationship between tracking offset value and the number of data errors, in which the number of errors in the inside LPP;
FIG. 19B is a graph representing the relationship between tracking offset value and the number of data errors, in which, the number of errors in the outside LPP;
FIG. 19C is a graph representing the relationship between tracking offset value and the number of data errors, in which and the total number of errors in the inside LPP and outside LPP;
FIG. 20 is a flowchart showing the optimal tracking offset value according to a fourth embodiment;
FIG. 21 is a flowchart for creating a tracking offset reference table;
FIG. 22 is a table showing the relationship between tracking offset value and the number of data errors;
FIG. 23A is a graph representing the relationship between tracking offset value and the number of data errors, in which the number of errors in the inside LPP is indicated in (a),
FIG. 23B is a graph representing the relationship between tracking offset value and the number of data errors, in which the number of errors in the outside LPP,
FIG. 23C is a graph representing the relationship between tracking offset value and the number of data errors, in which and the total number of errors in the inside LPP and outside LPP;
FIG. 24 is a flowchart for detecting the optimal tracking offset value in a linking area, based on the number of errors; and
FIG. 25 is a flowchart for detecting the optimal tracking offset value in a linking area, based on the amplitude.

### DETAILED DESCRIPTION OF THE PREFERRED EMBODIMENTS

The preferred embodiments of an information recording and reproducing apparatus according to the present invention will be described below.

### (1) First embodiment

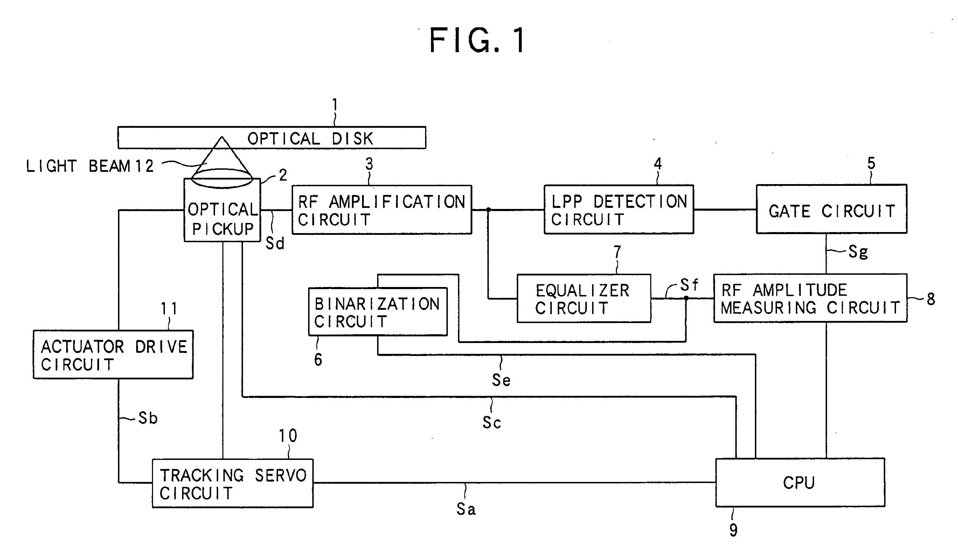

FIG. 1 is a block diagram of an information recording and reproducing apparatus according to a first embodiment.

The information recording and reproducing apparatus of this embodiment comprises an optical pickup 2, an RF amplification circuit 3, an LPP detection circuit 4, a gate circuit 5, a binarization circuit 6, an equalizer circuit 7, an RF amplitude measuring circuit 8, a CPU 9, a tracking servo control circuit 10, and an actuator drive circuit 11.

When the information is recorded on an optical disk 1, a tracking control signal Sa is sent from the CPU 9 to the tracking servo circuit 10, which passes a signal to the actuator drive circuit 11, based on the tracking control circuit Sa. The actuator drive circuit 11 drives the optical pickup 2, based on the control signal Sc, to move the optical pickup 2 to a desired position of the optical pickup 1. Then, the information signal Sc is sent from the CPU 9 to the optical pickup 2, and a light beam 12 is applied onto the optical disk 1, based on the information signal Sc sent to the optical pickup 2, whereby an information pit is formed on the optical disk 1.

Also, when the information pit formed on the optical disk 1 is reproduced, a tracking control signal Sa is sent from the CPU 9 to the tracking servo circuit 10, which passes a control signal Sb to the actuator drive circuit 11, based on the tracking control circuit Sa. The actuator drive circuit 11 drives the optical pickup 2, based on the control signal Sb, to move the optical pickup 2 to a desired position of the optical pickup 1. If the light beam 12 is radiated from the optical pickup 2 to the optical disk 1, a reflected light is produced corresponding to the presence or absence of information pit. The reflected light is converted from light to an electric signal in the optical pickup 2, a converted electric signal as a regenerative signal Sd being passed to the RF amplification circuit 3. The regenerative signal Sd is amplified in the RF amplification circuit 3, subjected to an equalizing process in the equalizer circuit 7, and output as an RF signal Sf. The RF signal Sf is binarized in the binarization circuit 6, and taken as a binarized signal Se into the CPU 9. The binarized signal Se is demodulated and subjected to error detection/correction in the CPU 9 to produce data.

The regenerative signal Sd sent to the RF amplification circuit 3 is passed to the LPP detection circuit 4 to detect the presence or absence of LPP. If the LPP is detected, a gate signal for measuring the regenerative signal Sd near the LPP is generated in the gate circuit 5. Also, the RF signal Sf is sent to the RF amplitude measuring circuit 8, which measures the amplitude of RF signal Sf during a period where the gate signal Sg generated in the gate circuit 5 occurs and sends the result to the CPU 9.

### (a) Measurement principle

A measurement principle of the first embodiment will be described below.

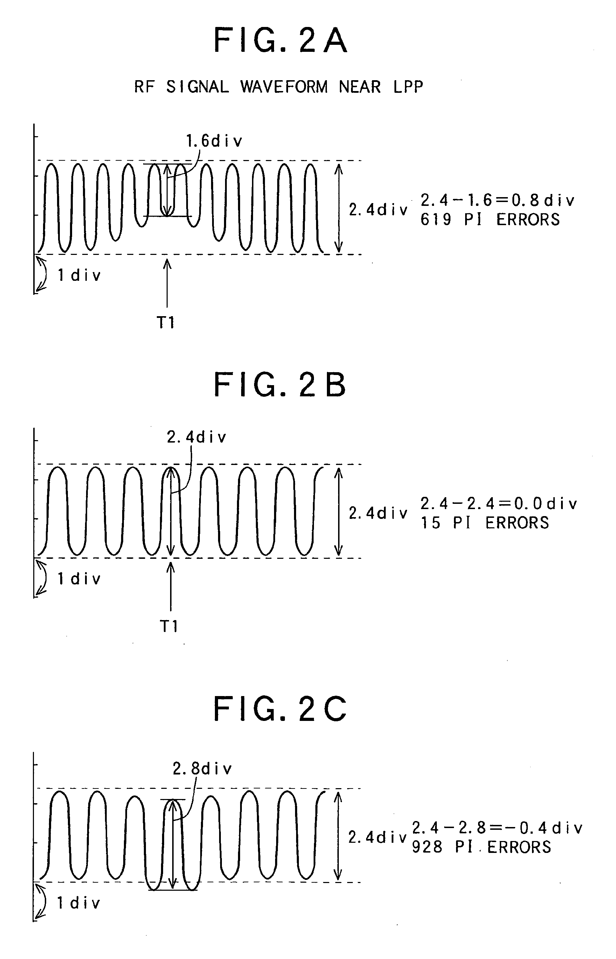

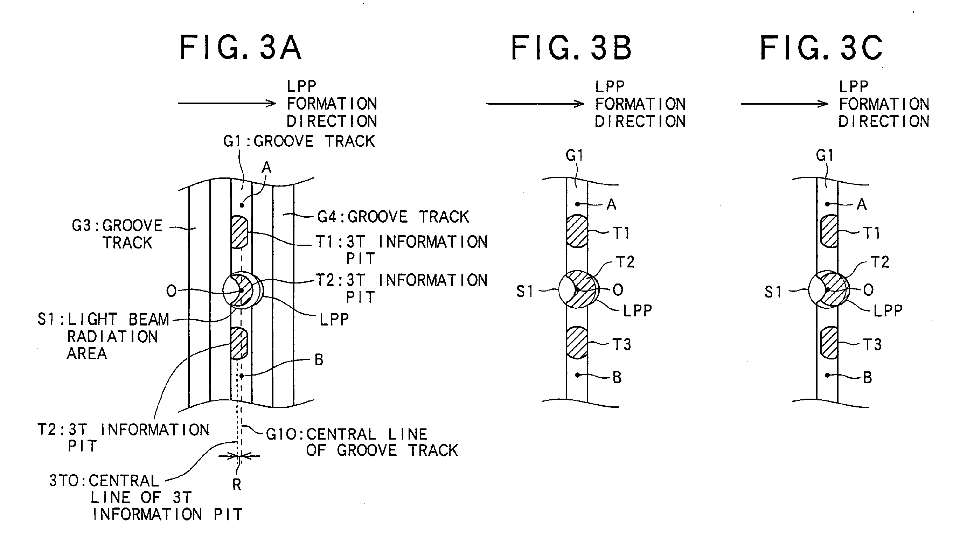

FIG. 2 is a diagrammatic chart of an RF signal waveform of which amplitude is measured in the RF amplitude measuring circuit 8. The RF signal waveform of FIG. 2 is the RF signal waveform in reproducing an information pit having a length of up to 3T (T indicates the minimum unit time of clock period, and 3T indicates the information pit having the shortest length among the information pits formed on the groove track G1). FIG. 3 is a view showing the positional relationship between light beam radiation area, the LPP (LPP as in Patent Document 1) and 3T information pit corresponding to each RF signal waveform of FIG. 2. In the regenerative signal waveform of FIG. 2A, the waveform having the amplitude as indicated by the arrow is the regenerative signal waveform when reproducing the information pits having a length of 3T (hereinafter referred to as 3T information pits), T1 to T3, recorded on the groove track G1 as shown in FIG. 3A, while the light beam radiation area S1 is being moved from A point to B point. The regenerative signal waveform of FIG. 2B is the regenerative signal waveform when reproducing the LPP as shown in FIG. 3B, while the light beam radiation area S1 is being moved from A point to B point. The regenerative signal waveform of FIG. 2C is the regenerative signal waveform when reproducing the LPP as shown in FIG. 3C, while the light beam radiation area S1 is being moved from A point to B point.

FIG. 3A shows a state where the central line 3TO of 3T information pit formed on the groove track G1 is shifted by length R to the left from the central line G1O of groove track G1 in FIG. 3A. That is, a row of 3T information pits is shifted to the left by length R and recorded. In the following, an instance of R=0.086 µm will be described. In FIG. 3A, since the central line 3TO of 3T information pit formed on the groove track G1 is shifted in an opposite direction to LPP formation direction as indicated by the arrow from the central dotted line G1O of groove track G1, the offset value is indicated as -0.086 µm. In this case, regarding the information pit recorded at a formation position of the LPP, the cut amount of information pit to record is increased, because a trap portion of land inside the LPP to the groove is equivalently greater, whereby the slenderer information pit than any other information pit is formed. In this state, the central point O in the light beam radiation area S1 for reproducing the information of 3T information pit is moved in the direction from A to B on the groove track G1 to be coincident with the central line G1O of groove track G1, while reproducing. Consequently, when the light beam radiation area S1 comes to a position where the LPP is formed, there is less change in the amount of reflected light from the light beam radiation area S1, whereby in the RF signal amplitude in FIG. 2A, the amplitude near T2 corresponding to the amount of reflected light decreases. When the center O of this light beam radiation area S1 comes closest to the LPP, the amplitude of RF signal in FIG. 2A decreases most significantly. When the light beam radiation area S1 is moved from A to B, the RF signal amplitude from the light beam radiation area S1 gradually decreases as it comes closer to the LPP, and gradually increases as it is farther away from the LPP.

FIG. 3B shows an instance where the central point O of the light beam radiation area S1 for the 3T information pit formed on the groove track G1, the central line G1O of groove track G1 on which the 3T information pit is formed, and the central line 3TO of 3T information pit are coincident. In this case, the amplitude of corresponding RF signal in FIG. 2B is not affected by the presence of LPP. This is because, when the 3T information pit T2 is formed on the LPP, the spread amount of information pit T2 in the LPP formation direction beyond other 3T information pits T1 and T3 and the cut amount of information pit T2 due to trap of inside land are coincident. That is, since the 3T information pit T2 is formed so that convexity in the LPP formation direction and concavity in the opposite direction may be offset, the area where the light beam radiation area S1 and the 3T information pit T2 overlap is not different from the area where other 3T information pits T1 and T3 and the light beam radiation area S1 overlap.

FIG. 3C shows a state where the central line 3TO of 3T information pit formed on the groove track G1 is shifted by 0.086 µm to the right from the central line G1O of groove track G1 in FIG. 3A. The central line 3TO is shifted in the same direction as the LPP formation direction as shown in FIG. 3A, and indicated as +0.086 µm. That is, a row of 3T information pits is shifted to the right by a length of +0.086 µm and recorded. In this case, the information pit recorded at a formation position of the LPP has equivalently a small trap portion of land inside the LPP to the groove, and the cut amount of information pit to record is decreased. On the other hand, since the information pit to record expands in the LPP formation direction, the thicker information pit than any other information pit is formed. In this state, the center O of light beam radiation area S1 is moved from A to B on the central line G1O of groove track G1, while reproducing. Consequently, the light beam radiation area S1 comes to the position where the LPP is formed, there is a greater changer in the amount of reflected light from the light beam radiation area S1, whereby in the RF signal amplitude of FIG. 2C, the amplitude near T2 corresponding to the amount of reflected light increases. When the center O of this light beam radiation area S1 comes closest to the LPP, the amplitude of RF signal in FIG. 2A increases most significantly. When the light beam radiation area S1 is moved from A to B, the RF signal amplitude from the light beam radiation area S1 gradually increases as it comes closer to the LPP, and gradually decreases as it is farther away from the LPP.

Accordingly, FIG. 3B shows the optimal recording state, in which the RF signal is not affected by the LPP. On the other hand, in FIGS. 3A and 3C, the spread amount of information pit to record in the LPP formation direction and the cut amount of information pit due to trap of inside land are unbalanced, so that the RF signal amplitude takes different level in that portion alone.

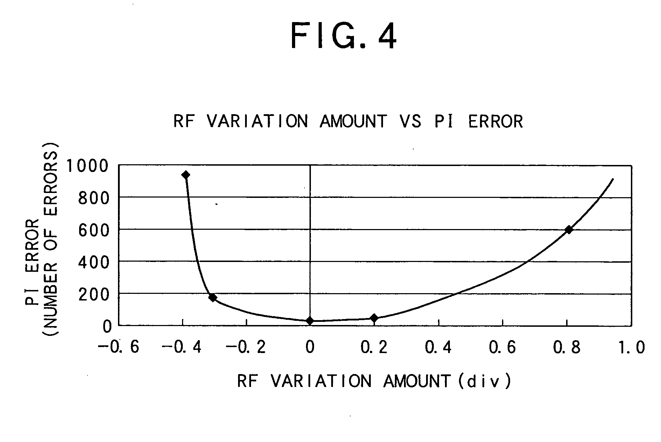

FIG. 4 is a graph showing the experimental results for the relationship between RF variation amount and the number of PI (Inner Parity) errors as described in Patent Document 3. The RF variation value is defined as a value of subtracting the amplitude value of RF signal of reproducing the information pit containing the LPP in the radiation area of light beam 12 from the amplitude value of RF signal of reproducing the information pit not containing the LPP in the radiation area of light beam 12. Also, among the number of errors found when the RF signal of reproducing the information pit containing the LPP in the radiation area of light beam 12 at that time is binarized in the binarization circuit 6, demodulated in the CPU 9, and subjected to error detection/correction (ECC), the number of errors occurring with the PI (Inner Parity) is defined as the PI error number.

The RF variation amount of FIG. 2A is 0.8 division (1 division corresponds to one graduation in FIG. 2A, hereinafter abbreviated as div.). The PI error number at that time is 619 from the experiments. The RF variation amount of FIG. 2B is 0.0 (div.), and the PI error number at that time is 15. The RF variation amount of FIG. 2C is -0.4 (div.), and the PI error number at that time is 928. As indicated at points in FIG. 4, the PI error number is 18 when the RF variation amount is 0.2 (div), and the PI error number is 181 when the RF variation amount is -0.3 (div), both of which are not shown in FIG. 2. As seen from FIG. 4, the PI error number is the smallest when the RF variation amount is near zero.

From the above measurement principle, the RF variation amount is measured in reproducing the 3T information pit formed by changing the tracking offset value by the CPU 9, and the tracking offset value at which the RF variation amount is zero is set up, whereby the tracking offset value for recording with the least data error number can be decided.

### (b) Embodiment

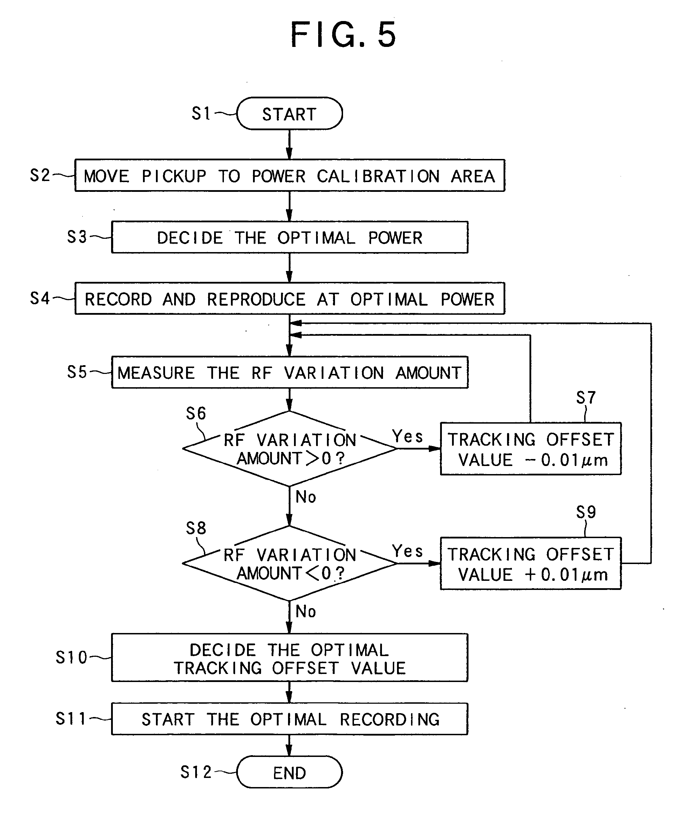

Referring to a flowchart of FIG. 5, the operation of the first embodiment will be described below with the configuration of FIG. 1.

FIG. 5 shows the flowchart for detecting the optimal tracking offset value.

At step S1, detecting the optimal tracking offset value is started.

At step S2, the optical pickup 2 of the information recording and reproducing apparatus is moved to a power calibration area on the optical disk 1. The power calibration area means the area for adjusting the intensity of light beam 12 radiated from the optical pickup 2 located on the inner circumference of the optical disk 1.

At step S3, the information recording and reproducing apparatus forms the information pits on the optical disk 1 by changing the intensity of light beam 12 emitted from the optical pickup 2 in the power calibration area and reproduces the information pits, whereby the optimal intensity of light beam 12 for forming the information pits is found and decided.

At step S4, the optical pickup 2 is moved to a desired location, for example, an unrecorded area, and the 3T information pits are formed and reproduced, employing the optimal power decided at step S3.

At step S5, among the regenerative signals when reproducing the information pits formed at step S4, the amplitude of regenerative signal of reproducing the 3T information pit not containing the LPP in the radiation area of light beam 12 and the amplitude of regenerative signal of reproducing the 3T information pit containing the LPP in the radiation area of light beam 12 are measured in the RF amplitude measuring circuit 8, and an RF variation amount that is an amplitude difference between the amplitude of regenerative signal of reproducing the 3T information pit not containing the LPP in the radiation area of light beam 12 and the amplitude of regenerative signal of reproducing the 3T information pit containing the LPP in the radiation area of light beam 12 is calculated in the CPU 9. The calculation result is stored in a memory within the CPU 9.

At step S6, when the RF variation amount measured at the present time is greater than the RF variation amount measured at the previous time, the RF variation amount is positive, and the operation goes to step S7, or when the RF variation amount measured at the present time is smaller than the RF variation amount measured at the previous time, the RF variation amount is negative, and the operation proceeds to step S8.

At step S7, a preset value is subtracted from the current tracking offset value (by subtraction, the central point O of light beam radiation area S1 is moved to the left from the central point GO of the groove track G1 in FIG. 3A). The subtraction value can be set to any value smaller than the distance between groove tracks. In this embodiment, 0.01 µm, for example, is employed. The information is recorded using the optimal power value decided at step S3. Thereafter, the operation goes to step S5.

At step S8, if the RF variation amount at step S6 is negative, the operation goes to step S9, or if the RF variation amount is positive, the operation proceeds to step S10.

At step S9, a preset value is added to the current tracking offset value (by addition, the central point O of light beam radiation area S1 is moved to the right from the central point GO of the groove track G1 in FIG. 3A). The addition value can be set to any value smaller than the distance between groove tracks. In this embodiment, 0.01 µm, for example, is employed. The information is recorded by adding 0.01 µm to the current tracking offset value, and using the optimal power value decided at step S3. Thereafter, the operation goes to step S5.

At step S10, the tracking offset value when the RF variation amount becomes zero is decided as the optimal tracking offset value.

At step S11, recording the information to be recorded on the optical disk 1 is started, using the optimal tracking offset value decided at step S10.

At step S12, when there is no recording data on the optical disk 1, the optimal recording is ended.

In FIG. 5, the tracking offset value is changed by checking the RF variation amount at steps S6 and S8, whereby the information is recorded and reproduced.

### (c) Modification of first embodiment

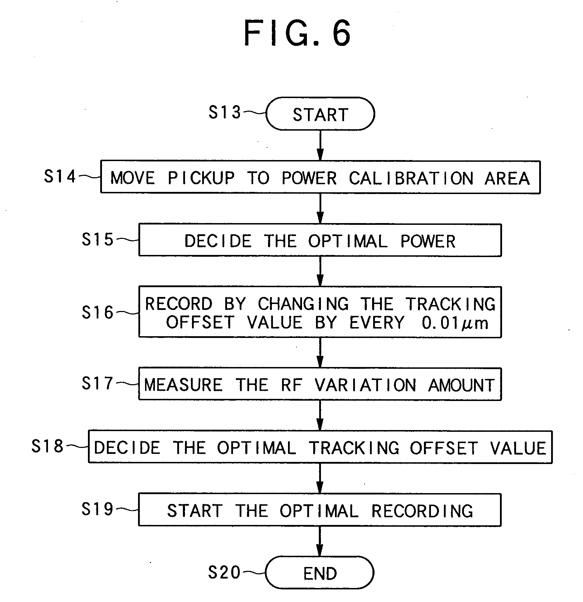

Amodification of the first embodiment will be described below with reference to a flowchart of FIG. 6 in which the information pits are continuously formed using the tracking offset value in a predetermined range, and the continuously formed information pits are continuously reproduced to decide the optimal tracking offset value.

FIG. 6 shows the flowchart for detecting the optimal tracking offset value.

At step S14, the optical pickup 2 of the information recording and reproducing apparatus is moved to a power calibration area on the optical disk 1. The power calibration area means the area for adjusting the intensity of light beam 12 radiated from the optical pickup 2 located on the inner circumference of the optical disk 1.

At step S15, the information recording and reproducing apparatus forms the information pits on the optical disk 1 by changing the intensity of light beam 12 emitted from the optical pickup 2 in the power calibration area, and reproduces the information pits, whereby the optimal intensity of light beam 12 for forming the information pits is found and decided.

At step S16, the optical pickup 2 is moved to a desired location (e.g., unrecorded area on the optical disk 1), and the information pits are formed over a plurality of continuous sectors by changing the tracking offset value, employing the optimal power decided at step S15. The tracking offset value may be changed at a regular interval in a range between groove tracks. Herein, the tracking offset value is changed at 17 steps by 0.01 µm to form the information pits. Thereafter, the formed information pits are reproduced.

At step S17, the amplitude of regenerative signal of reproducing the 3T signal not containing the LPP in the radiation area of light beam 12 and the amplitude of regenerative signal of reproducing the 3T signal containing the LPP in the radiation area of light beam 12 are measured for each tracking offset value in the RF amplitude measuring circuit 8, among the regenerative signals when reproducing the information pits formed at step S16, and an RF variation amount that is an amplitude difference between the regenerative signal of reproducing the 3T signal not containing the LPP in the radiation area of light beam 12 and the regenerative signal of reproducing the 3T signal containing the LPP in the radiation area of light beam 12 is calculated in the CPU 9. And the RF variation amount for each tracking offset value is stored in the memory within the CPU 9.

At step S18, the smallest one of the RF variation amounts recorded in the memory of the CPU 9 and obtained at step S17 is acquired through the comparing operation. Consequently, the tracking offset value that is the smallest RF variation amount is decided as the optimal tracking offset value.

At step S19, the recording data is recorded, using the optimal power value and the optimal tracking offset value.

At step S20, the recording is ended if there is no recording data.

As described above, in a recording disk in which the address signal is inscribed beforehand on the land as the LPP, the tracking offset value is changed to have a smaller difference between the amplitude of regenerative signal containing the LPP in the radiation area of light beam 12 and the amplitude of regenerative signal not containing the LPP in the radiation area of light beam 12, whereby it is possible to decrease the occurrence number of errors in the regenerative signal containing the LPP in the radiation area of light beam 12.

Also, the information pits are formed by changing the tracking offset value for each of continuous sectors, and the offset value having the least RF variation amount of regenerative signal of reproducing the information pits formed is set to the optimal tracking offset value, whereby the optimal tracking offset value is retrieved at high speed.

Also, in this embodiment, even when the tracking is unbalanced in the optical system including the optical pickup 2, it is possible to decrease the occurrence number of errors in the regenerative signal containing the LPP in the radiation area of light beam 12.

### (2) Second embodiment

A second embodiment in which the tracking offset value is optimized in the LPP as described in Patent Document 2 that is a different type from the LPP as described in Patent Document 1 and shown in FIG. 3 will be described below. Firstly, a measurement principle will be described below.

### (a) Measurement principle

The configuration of an information recording and reproducing apparatus according to the second embodiment is the same as shown in FIG. 1, and not described in detail.

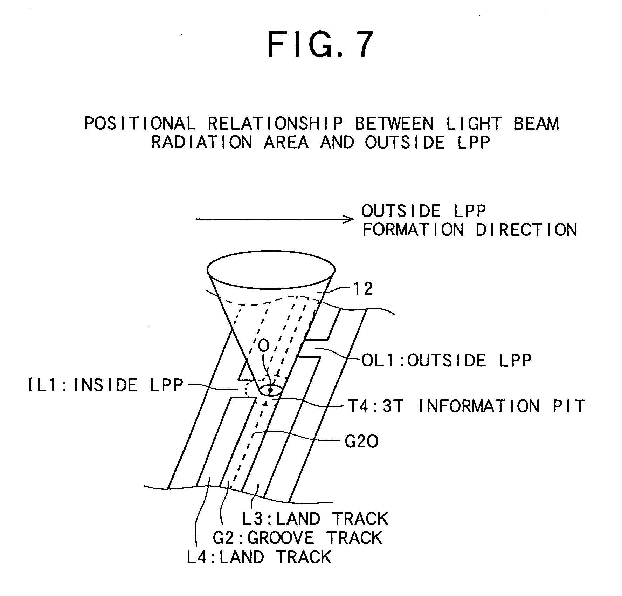

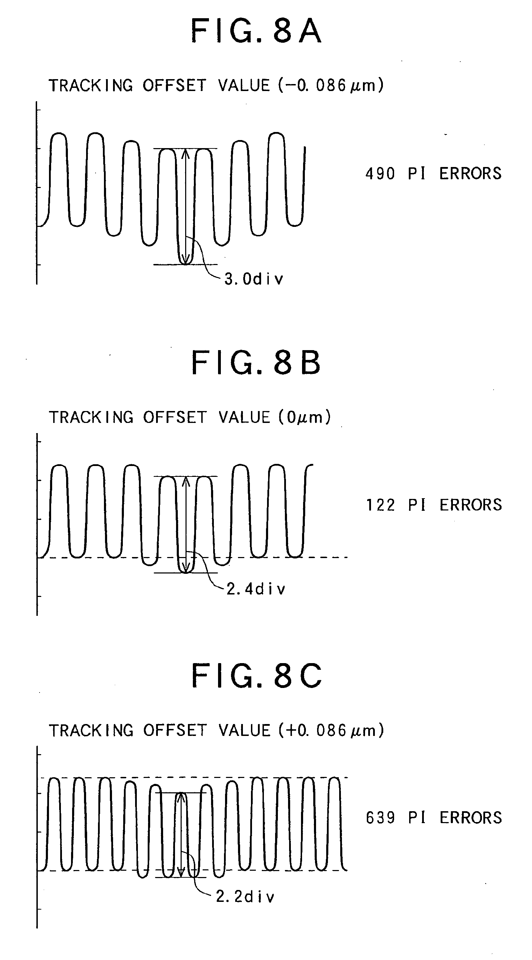

FIG. 7 shows the positional relationship between the LPP as described in Patent Document 2 that is a different type from the LPP as shown in FIG. 3 and the light beam radiation area. A light beam 12 radiated from the optical pickup 2 is converged, and applied onto the information pit formed on the groove track G2. A reflected light of applied light is measured as an RF signal waveform that is a regenerative signal. In FIG. 7, the LPP exists to the left of groove track G2. (This LPP is hereinafter referred to as an inside LPP.) FIG. 8 shows the RF signal waveform when forming and reproducing the information pit by changing the tracking offset value to move the light beam 12 from left to right of the groove track G2 in FIG. 7.

FIG. 8 shows the relationship between tracking offset value and RF signal waveform.

FIG. 8A shows a state where the central point O of light beam radiation area S1 in FIG. 7 is shifted by length R to the left from the center GO of groove track G1 where 3T information pit is formed. R is a preset amount, and 0.086 µm, for example. An instance of R=0.086 µm will be described. The value of R can be arbitrarily chosen in a range of distance between groove tracks. FIG. 8A shows an RF signal waveform of reproducing the 3T information pit T4 containing the inside LPP in the light beam radiation area S1 when -0.086 µm is added as the tracking offset value (the outside LPP formation direction is positive and its opposite direction is negative in FIG. 3). This shows that the light beam 12 is moved 0.086 µm to the left from the groove track G2 to form and reproduce the information pit in FIG. 7. Since the 3TRF signal amplitude T4 of reproducing the 3T information pit containing the inside LPP in the light beam radiation area is distorted more greatly than the 3TRF signal amplitude T5 of reproducing the 3T information pit not containing the inside LPP in the light beam radiation area (3TRF amplitude = 3 div.), 490 PI errors take place.

FIG. 8B shows an RF signal waveform near the inside LPP, when 0 µm is added as the tracking offset value, namely, when no tracking offset value is added. It will be found that the 3TRF signal amplitude of reproducing the 3T information pit containing the inside LPP in the light beam radiation area is almost equivalent to the 3TRF signal amplitude of reproducing the 3T information pit not containing the inside LPP in the light beam radiation area S1, and there is almost no influence of the inside LPP (3TRF amplitude = 2. 4 div.). Therefore, the occurrence number of PI errors is 122, and considerably small.

FIG. 8C shows a 3TRF signal waveform of reproducing the 3T information pit containing and not containing the inside LPP in the light beam radiation area, when +0.086 µm is added as the tracking offset value. In FIG. 7, the light beam 12 is moved to the right of the groove track G2 when recording and reproducing. Since the 3TRF signal amplitude of reproducing the 3T information pit containing the inside LPP in the light beam radiation area S1 is distorted more greatly than the 3TRF signal amplitude of reproducing the 3T information pit not containing the inside LPP in the light beam radiation area (3TRF amplitude = 2.2 div.), 639 PI errors take place.

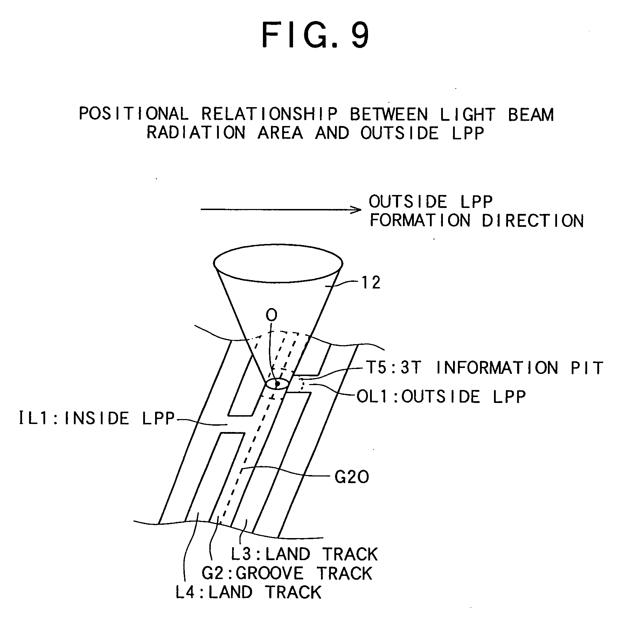

FIG. 9 shows a state where the radiation range S1 of light beam 12 is located to the left of LPPT5. In FIG. 9, the LPP exists to the right of the 3T information pit T5. (This LPP is hereinafter referred to as an outside LPP).

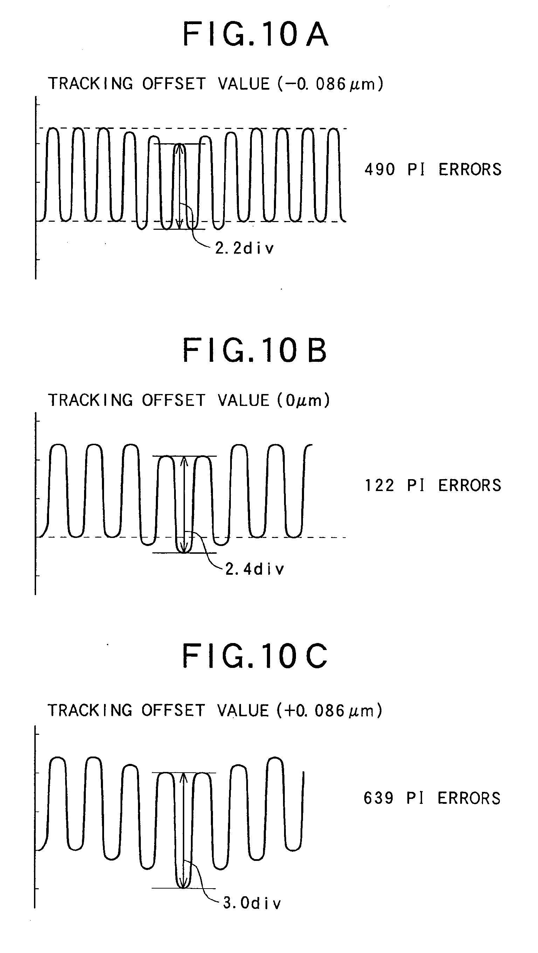

FIGS. 10A to 10C show an RF signal waveform when forming and reproducing the information pit by changing the tracking offset value to move the light beam 12 from left to right of the groove track G2 in FIG. 9.

FIGS. 10A to 10C are charts showing the relationship between tracking offset value and RF signal waveform.

FIG. 10A shows a state where the central point O of light beam radiation area S1 in FIG. 9 is shifted by length R to the left from the center GO2 of groove track G2 where 3T information pit is formed. R is a preset amount. An instance of R=0.086 µm will be described. The value of R can be arbitrarily chosen in a range of distance between groove tracks. FIG. 10A shows an RF signal waveform of reproducing the 3T information pit T5 containing the inside LPP in the light beam radiation area S1 when -0.086 µm is added as the tracking offset value (the outside LPP formation direction is positive and its opposite direction is negative in FIG. 9). Since the 3TRF signal amplitude of reproducing the information pit containing the outside LPP in the radiation area S1 of light beam 12 is distorted more greatly than the 3TRF amplitude of reproducing the information pit not containing the outside LPP in the radiation area of light beam 12 (3TRF amplitude = 2.2 div.), 490 PI errors take place.

FIG. 10B shows an RF signal waveform near the outside LPP, when 0 µm is added as the tracking offset value, namely, when no tracking offset value is added. The 3TRF signal amplitude containing the outside LPP in the light beam radiation area S1 is almost equivalent to the 3TRF signal amplitude not containing the outside LPP in the light beam radiation area, and there is almost no influence of the LPP on the regenerative signal (3TRF amplitude = 2.4 div.). Therefore, the occurrence number of PI errors is 122, and considerably small.

FIG. 10C shows an RF signal waveform near the outside LPP, when +0.086 µm is added as the tracking offset value. In FIG. 9, recording or reproducing is performed after the light beam 12 is moved +0.086 µm to the right of the groove track G2. The 3TRF signal amplitude containing the outside LPP in the light beam radiation area is distorted more greatly than the 3TRF signal amplitude not containing the outside LPP in the light beam radiation area (3TRF amplitude = 3.0 div.). Therefore, 639 PI errors take place.

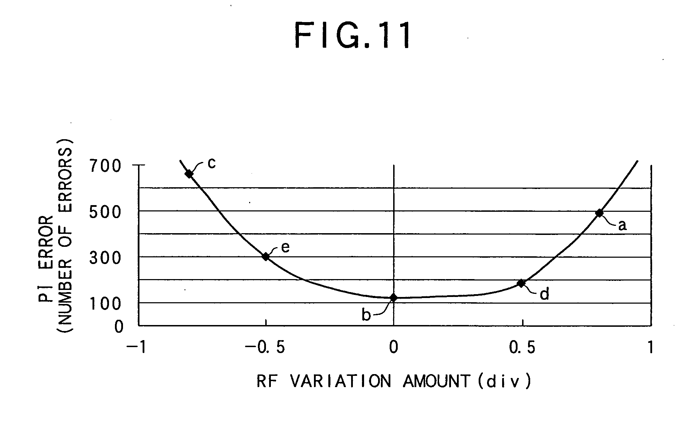

FIG. 11 is a graph showing the relationship between RF variation amount and the number of PI errors. The RF variation amount as used herein means the value of subtracting the 3TRF amplitude containing the outside LPP as shown in FIG. 10 in the light beam radiation area from the 3TRF amplitude containing the inside LPP as shown in FIG. 8 in the light beam radiation area at the same tracking offset value among the RF signal waveforms as shown in FIGS. 8 and 10. The 3TRF amplitude containing the inside LPP as shown in FIG. 8A in the light beam radiation area when -0.086 µm is added as the tracking offset value is 3 div. The 3TRF amplitude containing the outside LPP as shown in FIG. 10A in the light beam radiation area when -0.086 µm is added as the tracking offset value is 2.2 div. Accordingly, the RF variation amount is 0.8 div that is 3 div minus 2.2 div. At this time, the sum of the number of PI errors in FIG. 8A and the number of PI errors in FIG. 10A is 490. At point a in FIG. 11, the number of PI errors is 490 for the RF variation amount of 0. 8 div. Likewise, at point b, when the RF variation amount is 0 as a result of subtracting the 3TRF amplitude of 2.4 div containing the outside LPP as shown in FIG. 10B in the light beam radiation area from the 3TRF amplitude of 2.4 div containing the inside LPP as shown in FIG. 8B in the light beam radiation area, the sum of the number of PI errors is 122. Likewise, at point c, when the RF variation amount is -0.8 div as a result of subtracting the 3TRF amplitude of 3.0 div containing the outside LPP as shown in FIG. 10C in the light beam radiation area from the 3TRF amplitude of 2.2 div containing the inside LPP as shown in FIG. 8C in the light beam radiation area, the sum of the number of PI errors is 639. Though being not shown in FIGS. 8 and 10, at point d, the sum of the number of PI errors is 180 for the RF variation amount 0.5 div when the tracking offset value is -0.04 µm, and at point e, the sum of the number of PI errors is 278 for the RF variation amount -0.5 div when the tracking offset value is +0.04 µm.

As will be apparent from FIG. 11, the total number of PI errors is the smallest near the RF variation amount of 0. Accordingly, the number of errors in reading the information pits is the smallest by setting the tracking offset value to 0.

From the above measurement principle, considering that the LPP is present on either side of the groove track, the tracking offset value at the smallest RF variation amount is defined as the optimal tracking offset value in a case where the LPP is present to the left of the groove track in the light beam radiation area and a case where the LPP is present to the right of the groove track in the light beam radiation area, thereby acquiring the optimal tracking value.

### (b) Embodiment

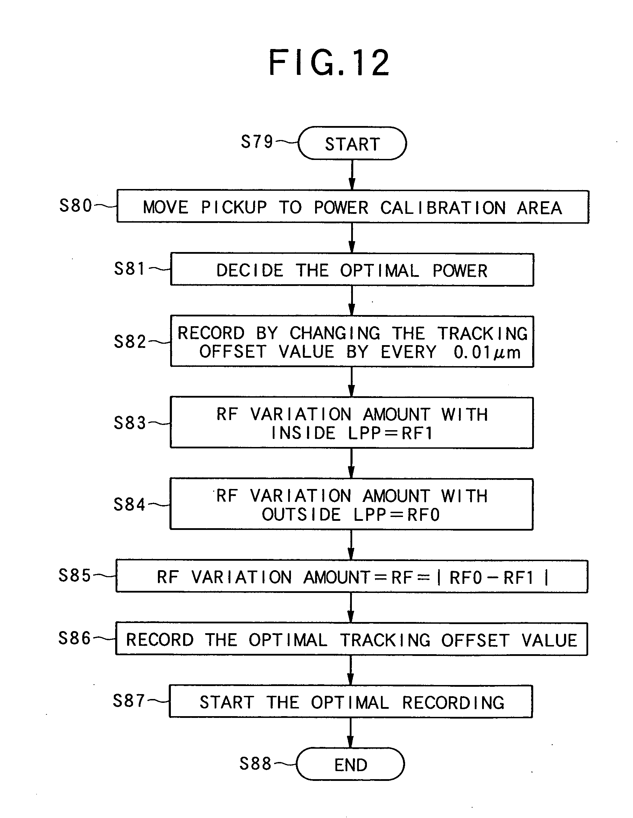

Referring to a flowchart of FIG. 12, the operation of the second embodiment will be described below with the configuration of FIG. 1.

FIG. 12 shows the flowchart for detecting the tracking offset value.

At step S80, the optical pickup 2 of the information recording and reproducing apparatus is moved to a power calibration area on the optical disk 1. The power calibration area means the area for adjusting the intensity of light beam 12 radiated from the optical pickup 2 located on the inner circumference of the optical disk.

At step S81, the information recording and reproducing apparatus forms the information pits on the optical disk 1 by changing the intensity of light beam 12 emitted from the optical pickup 2 in the power calibration area and reproduces the information pits, whereby the optimal intensity of light beam 12 for forming the information pits is found and decided.

At step S82, the optical pickup 2 is moved to a desired location (e.g., an unrecorded area of the optical disk 1), and the information pits are formed over a plurality of continuous sectors by changing the tracking offset value, employing the optimal power decided at step S15. The tracking offset value may be changed at a regular interval in a range between groove tracks. Herein, the tracking offset value is changed at 17 steps by 0.1 µm to form the information pits. Thereafter, the formed information pits are reproduced.

At step S83, the amplitude of regenerative signal of reproducing the 3T signal not containing the LPP in the radiation area of light beam 12 and the amplitude of regenerative signal of reproducing the 3T signal containing the inside LPP in the radiation area of light beam 12 are measured for each tracking offset value in the RF amplitude measuring circuit 8 among the regenerative signals when reproducing the information pits at step S82, and an RF variation amount RFI that is an amplitude difference between the regenerative signal of reproducing the 3T signal not containing the LPP in the radiation area of light beam 12 and the regenerative signal of reproducing the 3T signal containing the inside LPP in the radiation area of light beam 12 is calculated in the CPU 9. And the RF variation amount RFI for each tracking offset value is stored as a parameter RFI in the memory within the CPU 9.

At step S84, the amplitude of regenerative signal of reproducing the 3T signal not containing the LPP in the radiation area of light beam 12 and the amplitude of regenerative signal of reproducing the 3T signal containing the outside LPP in the radiation area of light beam 12 are measured for each tracking offset value in the RF amplitude measuring circuit 8 among the regenerative signals when reproducing the information pits at step S82, and an RF variation amount RFO that is an amplitude difference between the regenerative signal of reproducing the 3T signal not containing the LPP in the radiation area of light beam 12 and the regenerative signal of reproducing the 3T signal containing the inside LPP in the radiation area of light beam 12 is calculated in the CPU 9. And the RF variation amount RFO for each tracking offset value is stored as a parameter RFO in the memory within the CPU 9.

At step S85, the parameter RFI is subtracted from the parameter RFO for each tracking offset value, and the RF variation amount RF that is the absolute value of subtraction result is stored as a parameter RF in the memory within the CPU 9.

At step S86, the smallest one of the parameters RF recorded in the memory of the CPU 9 and obtained at step S85 is acquired through the comparing operation. Consequently, the tracking offset value corresponding to the parameter RF that is the smallest RF variation amount is decided as the optimal tracking offset value.

At step S87, the recording data is recorded, using the optimal power value and the optimal tracking offset value.

At step S88, the recording is ended if there is no recording data.

As described above, in a recording disk in which the address signal is inscribed beforehand on the land as the LPP, the tracking offset value is changed to make the RF variation amount smallest in the case of containing the LPP in the radiation area of light beam 12 from different directions, whereby it is possible to decrease the occurrence number of errors in the regenerative signal containing the LPP in the radiation area of light beam 12.

Also, with this embodiment, even when the tracking balance is off in the optical system comprising the optical pickup 2, it is possible to decrease the occurrence number of errors in the regenerative signal containing the LPP in the radiation area of light beam 12.

### (3) Third embodiment

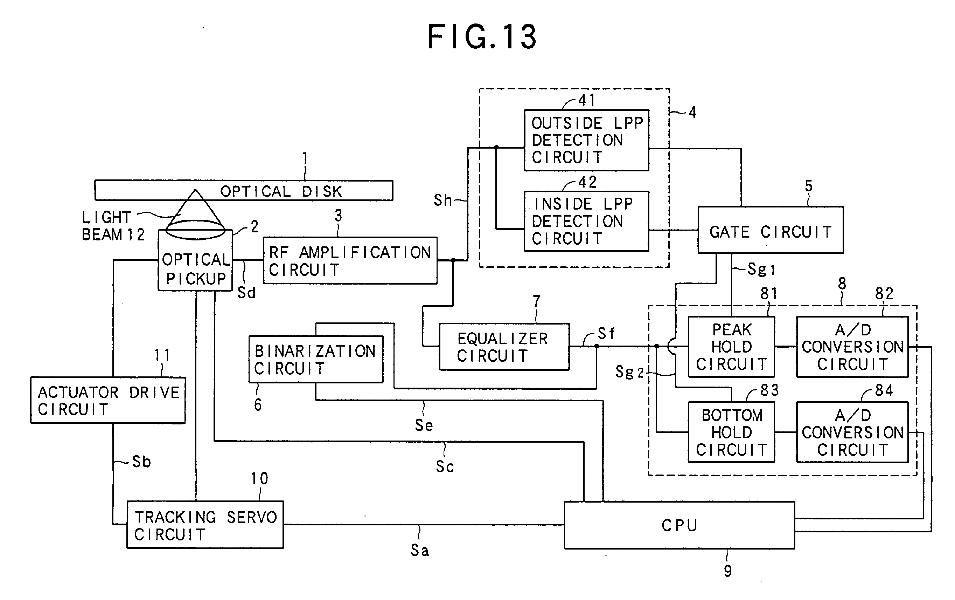

FIG. 13 shows the configuration of an information recording and reproducing apparatus according to a third embodiment. The detailed description for the common parts to FIG. 1 is not given here.

An LPP detection circuit 4 is composed of an outside LPP detection circuit 41 and an inside LPP detection circuit 42. The outside LPP detection circuit 41 is the circuit for detecting the LPP present on the outer circumference of a disk for the information pits formed on the groove from a push-pull signal Sh that is a tracking error signal, and the inside LPP detection circuit 42 is the circuit for detecting the LPP present on the inner circumference of disk for the information pits formed on the groove.

The RF amplitude measuring circuit 8 is composed of a peak hold circuit 81, a bottom hold circuit 82 and the A/D conversion circuits 82 and 84.

The peak hold circuit 81 is the circuit for holding a peak portion of the signal waveform of an RF signal Sf read from the optical disk 1. The held value is converted into a digital signal in an A/D conversion circuit 82, and then input into the CPU 9. The bottom hold circuit 83 is the circuit for holding a bottom portion of the signal waveform of the RF signal Sf read from the optical disk 1. The held value is converted into a digital signal in an A/D conversion circuit 84, and then input into the CPU 9.

The LPP detection circuit 4 detects the LPP in the light beam radiation area on the optical disk 1, and the CPU 9 calculates the peak value and the bottom value of regenerative signal waveform before and after the LPP detection timing from the digital signal outputs of the A/D conversion circuits 82 and 84.

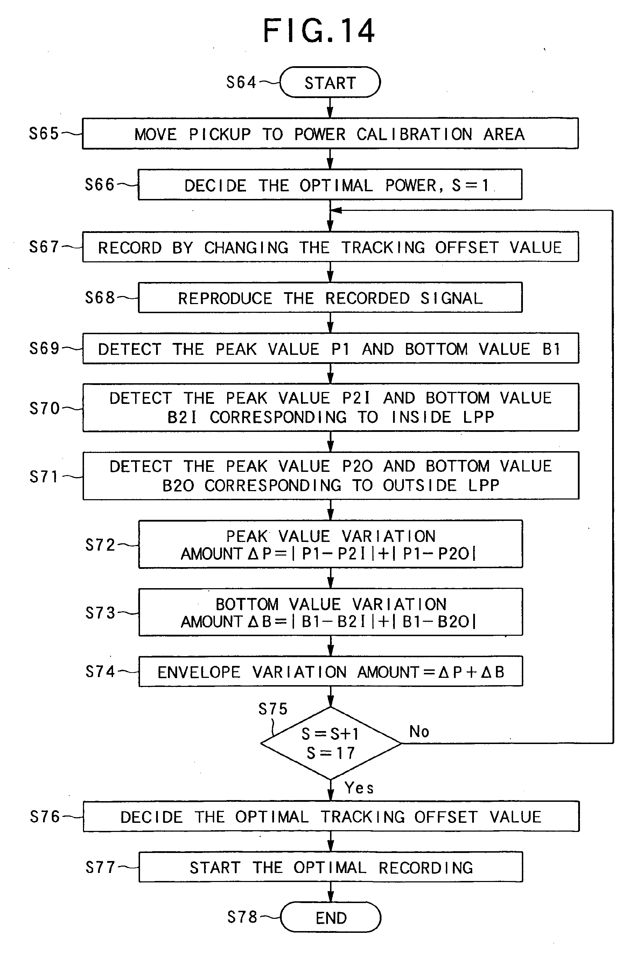

FIG. 14 shows a flowchart for detecting the optimal tracking offset value according to the third embodiment.

At step S64, detecting the optimal tracking offset value is started.

At step S65, the optical pickup 2 is moved to a power calibration area.

At step S66, the optimal value of the intensity of light beam 12 radiated from the optical pickup 2 is decided by moving the optical pickup 2 to the power calibration area. The sector number S is set to 1.

At step S67, the optical pickup 2 is moved to a desired location (e.g., an unrecorded area of the optical disk 1), and the information pits are formed over a plurality of continuous sectors by changing the tracking offset value, employing the optimal power decided at step S65. The tracking offset value may be changed at a regular interval in a range between groove tracks. Herein, the tracking offset value is changed at 16 steps by every 0.01 µm from -0.08 µm to +0.07 µm to form the information pits. Thereafter, the formed information pits are reproduced. At this time, it is arbitrary for what distance the information pits are formed per tracking offset value, but herein, the information pits are formed for one sector, for example. That is, 16 sectors are employed for 16 tracking offset steps from -0.08 µm to +0.07 µm. In this case, the formed information pit pattern may be any pit pattern, but herein, the information pits are formed, employing the 3T continuous pattern having the smallest distance between information pit patterns, as one example.

At step S68, the continuous pattern of 3T information pits recorded in one sector at the same tracking offset value at step S67 is reproduced.

At step S69, the peak value P1 of RF signal Sf not containing the LPP in the radiation area of light beam 12 during a period corresponding to a gate signal Sg1 from the gate circuit 5 is detected from the signals reproduced at step S68 in the peak hold circuit 81. Its detected value is converted into a digital signal in the A/D conversion circuit 82, and stored as a parameter P1 in the memory within the CPU 9. Also, the bottom value B1 of RF signal Sf not containing the LPP in the radiation area of light beam 12 during a period corresponding to a gate signal Sg2 from the gate circuit 5 is detected in the bottom hold circuit 83. Its detected value is converted into a digital signal in the A/D conversion circuit 84, and stored as a parameter B1 in the memory within the CPU 9.

At step S70, the peak value and the bottom value of RF signal Sf containing the inside LPP in the radiation area of light beam 12 are detected from the signals reproduced at step S68 in the same manner as the operation at step S69, in which the peak value is stored as a parameter P2I and the bottom value is stored as a parameter B2I in the memory within the CPU 9.

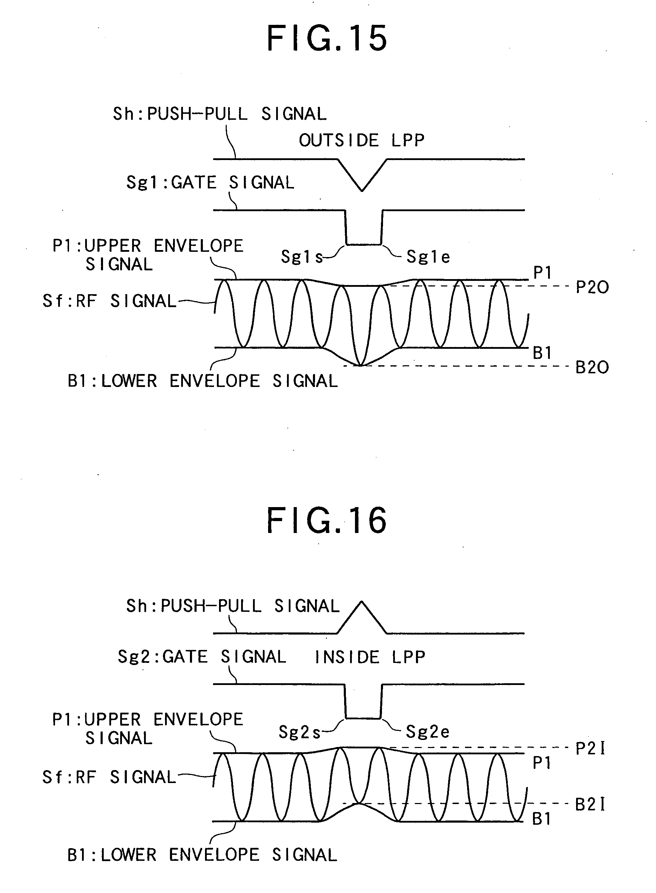

FIG. 16 shows the relationship between push-pull signal Sh, RF signal Sf, gate signal Sg2, peak value P2I and bottom value B2I for the inside LPP. In FIG. 16, an upper envelope signal PI means an envelope curve at the upper end of RF signal Sf, and a lower envelope signal B1 means an envelope curve at the lower end of RF signal Sf. The envelope signal is generated by a circuit composed of transistors and condensers. The push-pull signal Sh is convex upwards at a timing when the inside LPP exists, and the gate signal SG2 is generated by binarizing the inside LPP. The upper peak values of the upper envelope signal P1 and the lower envelope signal B1 of the RF signal Sf during a period from Sg2s to Sg2e of the gate signal Sg2 produced by the inside LPP are held in the peak hold circuit 81 and the bottom hold circuit 83, which are composed of diodes and condensers. The peak hold circuit 81 holds the peak value P2I of the upper envelope signal of RF signal Sf. And the peak value P2I is stored as parameter P2I. Also, the bottom hold circuit 83 holds the bottom value B2I of the lower envelope signal of RF signal Sf. And the bottom value B2I is stored as parameter B2I.

At step S71, the peak value and the bottom value of RF signal Sf containing the outside LPP in the radiation area of light beam 12 are detected from the signals reproduced at step S68 in the same manner as the operation at step S69, in which the peak value is stored as a parameter P2O and the bottom value is stored as a parameter B2O in the memory within the CPU 9.

FIG. 15 shows the relationship between push-pull signal Sh, RF signal Sf, gate signal Sg1, peak value P2O and bottom value B2O for the outside LPP. In FIG. 15, an upper envelope signal P1 means an envelope curve at the upper end of RF signal Sf, and a lower envelope signal B1 means an envelope curve at the lower end of RF signal Sf. The push-pull signal Sh is convex downwards at a timing when the outside LPP exists, and the gate signal SG1 is generated by binarizing the outside LPP. The lower peak values of the upper envelope signal P1 and the lower envelope signal B1 of the RF signal Sf during a period from Sg1s to Sg1e of the gate signal Sg1 produced by the outside LPP are held in the peak hold circuit 81 and the bottom hold circuit 83, which are composed of diodes and condensers. The peak hold circuit 81 holds the peak value P2O of the upper envelope signal of RF signal Sf. And the peak value P2O is stored as parameter P2O. Also, the bottom hold circuit 83 holds the bottom value B2O of the lower envelope signal of RF signal Sf. And the bottom value B2O is stored as parameter B2O.

At step S72, the peak value variation amount ΔP, |P1-P2I|+|P1-P2O| is calculated in the CPU 9, and stored as a parameter ΔP in the memory within the CPU 9.

At step S73, the bottom value variation amount ΔB, |B1-B2I|+|B1-B2O| is calculated in the CPU 9, and stored as a parameter ΔB in the memory within the CPU 9.

At step S74, the envelope variation amount ΔE, ΔP+ΔB is calculated in the CPU 9, and stored as a parameter ΔE in the memory within the CPU 9.

At step S75, the sector number S is incremented by one, and if the reproduction position is at the 18-th sector (sector number S is 17), the operation proceeds to step S76, or if the reproduction position is from second to 16-th sector, the operation goes to step S68.

At step S76, the smallest one of the parameters ΔE for 16 sectors calculated at step S74 is acquired through the comparing operation in the CPU 9, and the tracking offset value corresponding to the parameter ΔE is decided as the optimal tracking offset value.

At step S77, the recording data is recorded, using the optimal tracking offset value decided at step S76.

At step S78, the recording is ended if there is no recording data.

As described above, in a recording disk in which the address signal is inscribed beforehand on the land as the LPP, the tracking offset value is changed to have the smallest variation between the amplitude of regenerative signal containing the LPP in one direction in the light beam radiation area and the amplitude of regenerative signal containing the LPP in another direction in the light beam radiation area, when containing the LPP in the radiation area of light beam 12 from different directions, whereby it is possible to decrease the occurrence number of errors in the regenerative signal containing the LPP in the radiation area of light beam 12.

Also, with this embodiment, even when the tracking is unbalanced in the optical system including the optical pickup 2, it is possible to decrease the occurrence number of errors in the regenerative signal containing the LPP in the radiation area of light beam 12.

Though in this embodiment, the operation of FIG. 14 has been described, employing the block configuration as shown in FIG. 13 as the configuration of the LPP as shown in FIGS. 7 and 8, the operation of FIG. 14 may be performed, employing the block configuration as shown in FIG. 13 for the LPP as shown in FIG. 3.

### (4) Fourth embodiment

A fourth embodiment in which the information encoded by ECC is formed as information pits on the optical disk 1, and reproduced to acquire the optimal tracking offset value will be described below.

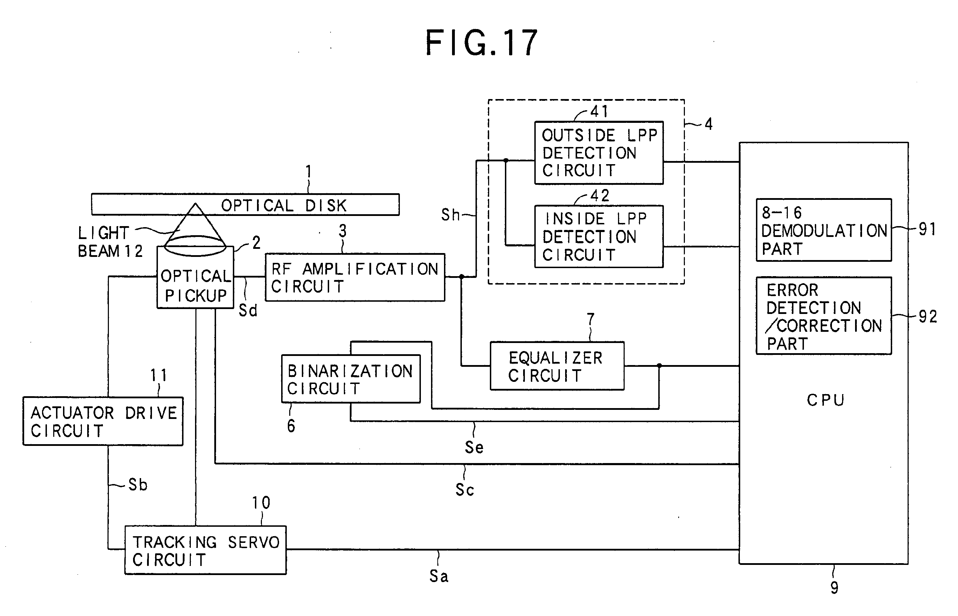

FIG. 17 is a block diagram of an information recording and reproducing apparatus according to the fourth embodiment. The common parts to FIG. 1 are designated by the same reference numerals, and are not described here.

A regenerative signal Sd reproduced via the information pits from the optical pickup 2 is passed via the equalizer circuit 7, binarized into a binarization signal by the binarization circuit 6, and demodulated in the 8-16 demodulator 91 within the CPU 9. The demodulated data is passed through an error detection/correction part 92 to detect an error occurrence section. Moreover, the CPU 9 calculates where the error occurrence section is on the optical disk 1 from the ECC code.

The LPP detection circuit 4 is composed of an outside LPP detection circuit 41 and an inside LPP detection circuit 42. The outside LPP detection circuit 41 is the circuit for detecting the LPP present on the outer circumference of a disk for the information pits formed on the groove from a tracking error signal, and the inside LPP detection circuit 42 is the circuit for detecting the LPP present on the inner circumference of disk for the information pits formed on the groove.

When the LPP detection circuit 4 detects the LPP in the radiation area of light beam 12, the CPU 9 determines whether or not there is any error in the reflected light of light beam 12. In this manner, the information pits encoded by ECC and recorded on the optical disk 1 are reproduced to detect the outside and inside LPP, whereby the CPU 9 knows whether or not there is any error in the regenerative signal of the information pit containing the LPP in the radiation area of light beam 12.

A measurement principle of the embodiment 4 will be described below, based on the relationship between the tracking offset value and the number of errors that the regenerative signal is detected as the error in forming and reading the information pit employing the tracking offset value, in the case of the LPP type as described in Patent Document 2.

### (a) Measurement principle

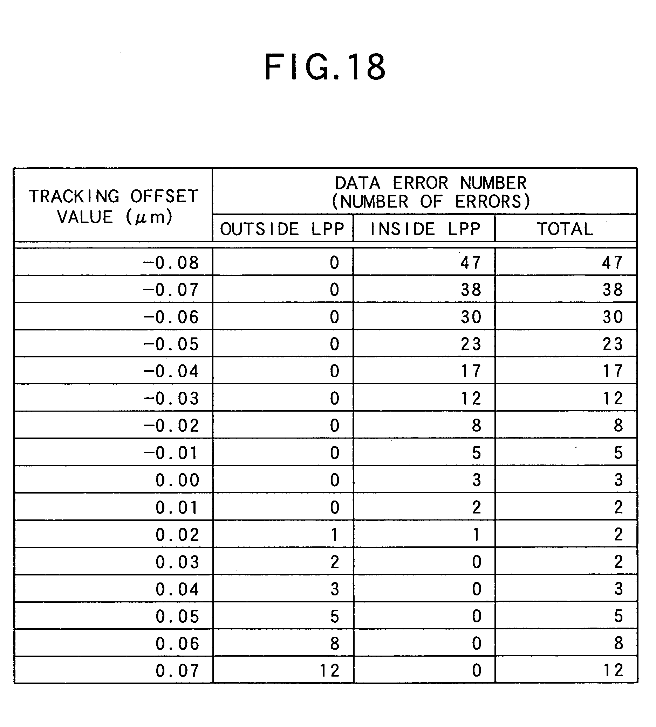

FIG. 18 shows the relationship between the tracking offset value and the number of data errors at the tracking offset value.

The number of data errors as indicated in a column of inside LPP is the number of errors occurring with the positional relationship between the information pit T4 in FIG. 7 and the inside LPP (IL1). Each column of FIG. 18 indicates the occurrence number of data errors in forming and reproducing the information pit by moving the tracking offset value (µm) by every 0.01 µm from left to right in FIG. 7. The tracking offset value may be set to any value within the distance between groove tracks. An instance where the tracking offset value is changed by every 0.01 µm will be described in this embodiment. When the tracking offset value is minus, one part of the information pit is formed on the inside LPP (IL1), so that the level variation occurs with respect to the information pits without the LPP, increasing the number of data errors. When the tracking offset value is plus, the formation position of information pit is moved a little from the groove track G2 to the land track L3. Since one part of the information pit is not formed on the inside LPP, there is almost no data error.

The number of data errors as indicated in a column of outside LPP is the number of errors occurring with the positional relationship between the information pit T5 in FIG. 9 and the outside LPP (OL1). Each column of FIG. 18 indicates the occurrence number of data errors in forming and reproducing the information pit by moving the tracking offset value (µm) by every 0.01 µm from left to right in FIG. 9. When the tracking offset value is minus, the formation position of information pit is moved from the groove track G2 to the land track L4, in contract with the inside LPP. Since one part of the information pit is not formed on the outside LPP, there is almost no data error. When the tracking offset value is plus, one part of the information pit is formed on the outside LPP, so that the level variation occurs in the information pits without the LPP, increasing the number of data errors.

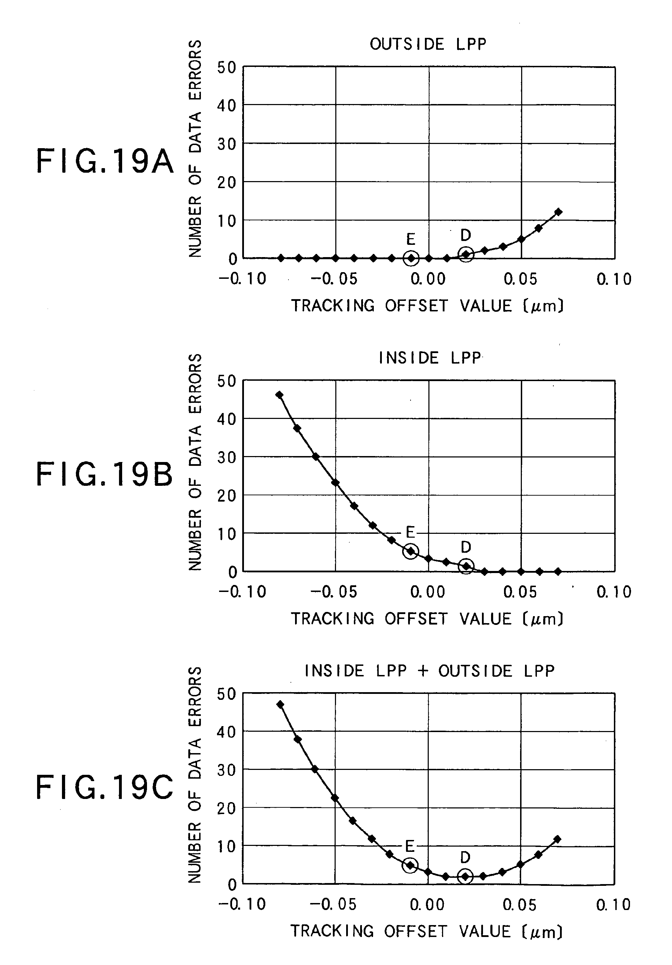

FIG. 19 is a graph showing the relationship between the tracking offset value and the number of data errors at the tracking offset value in FIG. 18.

FIG. 19A shows the relationship between the tracking offset value and the number of data errors occurring in the regenerative signal containing the outside LPP in the radiation area of light beam 12 at the tracking offset value, FIG. 19B shows the relationship between the tracking offset value and the number of data errors occurring in the regenerative signal containing the inside LPP in the radiation area of light beam 12 at the tracking offset value, and FIG. 19C shows the relationship between the tracking offset value and the sum of the number of data errors occurring in the inside LPP and the outside LPP at the tracking offset value.

From FIG. 19A, it will be found that the number of data errors is increased as the tracking offset value is greater in the outside LPP. From FIG. 19B, it will be found that the number of data errors is increased as the tracking offset value is smaller in the inside LPP. From FIG. 19C, when the tracking offset value is 0.02 µm, the sum of the number of data errors is 2 (D point). When the tracking offset value is 0.01 µm and 0.03 µm, the sum of the number of data errors is 2. The optimal tracking offset value is set to their intermediate value, or 0.02 µm.

### (b) Embodiment

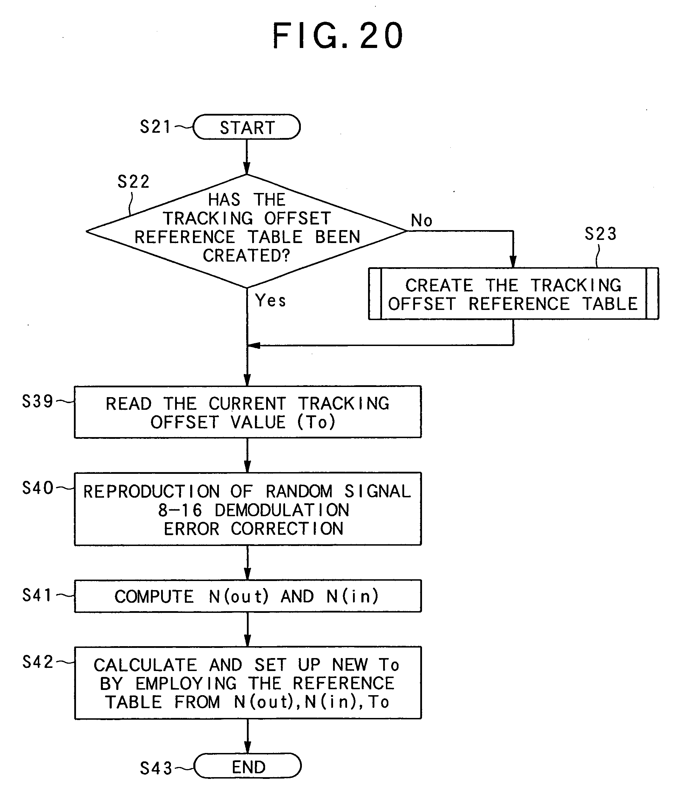

FIG. 20 shows a flowchart for acquiring the optimal tracking offset value according to a fourth embodiment.

At step S21, detecting the optimal tracking offset value is started.

At step S22, it is checked whether or not the relationship between the tracking offset value as shown in FIG. 18 and the number of data errors occurring in containing the inside LPP or outside LPP in the light beam radiation area S1 at the tracking offset value (hereinafter referred to as a tracking offset reference table) is created. If the tracking offset reference table is not created, the operation goes to step S23, or if not created, the operation proceeds to step S39.

At step S39, the current tracking offset value is read from the value saved as parameter To within the CPU 9. The tracking offset value To is saved as parameter To within the CPU 9, when the information recording and reproducing apparatus reads the data from the optical disk 1, or records the data.

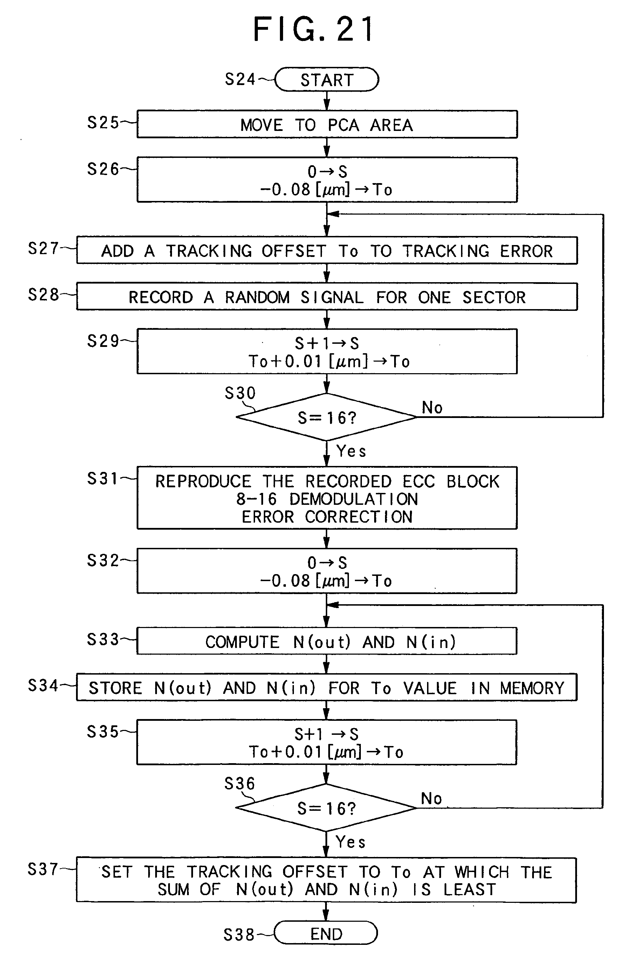

FIG. 21 shows a processing flow to be performed at step S23.

FIG. 21 is an internal flow at step S23 for creating the tracking offset reference table.

At step S24, creation of the tracking offset reference table is started.

At step S25, the optical pickup 2 is moved to the power calibration area of the optical disk 1.

At step S26, the sector number S of the sector for recording and reproducing at the first tracking offset value is set to 0.

Though the tracking offset value can be set to any value within the distance between groove tracks, an instance where the tracking offset value is changed by every 0.01 µm from -0.08 µm to +0. 07 µm will be described in this embodiment. Also, though the area on the optical disk 1 for forming the information pits may be set arbitrarily, 16 sectors making up 1 ECC block, for example, are employed in this embodiment. The number of ECC blocks and the number of sectors making up 1 ECC block are not limited to those of this embodiment.

The tracking offset value is changed for each sector to make the recording and reproducing. The first tracking offset value To is set to -0.08 µm.

At step S27, the tracking offset value To -0.08 µm set at step S26 is added to the tracking error signal. Consequently, the optical pickup 2 is moved in the opposite direction to the outside LPP formation direction as shown in FIG. 7 by 0.08 µm from a light beam radiation position corresponding to the tracking error signal 0.

At step S28, a signal with ECC code after the 8-16 modulation is recorded for one sector.

At step S29, the sector number S is incremented by one, and the tracking offset value To is increased by 0.01 µm.

At step S30, it is determined whether or not the sector number S is 16. If the sector number S is 16, the operation proceeds to step S31, or if the sector number S is not 16, the operation returns to step S27, where a signal with ECC code after the 8-16 modulation is recorded at different tracking offset value in the next sector.

At step S31, the recorded signal is reproduced, and subjected to the 8-16 demodulation and the error detection/correction.

At step S32, the sector number S for reproduction is set to 0. The tracking offset value To is set to -0.08 µm that is the same value as set at step S26, and the information pits formed at step S28 are reproduced.

At step S33, the information pits formed in one sector are reproduced, and the number of errors N(out) occurring in the regenerative signal containing the outside LPP in the light beam radiation area and the number of errors N(in) occurring in the regenerative signal containing the inside LPP in the light beam radiation area at the set tracking offset value To are calculated.

At step S34, the To value, N (out) and N (in) are stored in the memory within the CPU 9.

At step S35, the sector number S is incremented by one, and the tracking offset value To is increased by 0.01 µm.

At step S36, it is determined whether or not the sector number S is 16. If the sector number S is 16, the operation proceeds to step S37, or if the sector number S is not 16, the operation returns to step S33, where the information pits formed in the next sector are reproduced at different tracking offset value.

At step S37, the tracking offset value To in which the sum of N (out) and N (in) is the smallest is found by comparing the sum of N(out) and N(in) for each tracking offset value To stored in the memory, and the optimal tracking offset value is set to the found value To.

At step S38, the tracking offset reference table creation process is ended.

At step S39, the tracking offset value To set up currently is read.

At step S40, the signal reproduction is performed. The reproduced signal is subjected to the 8-16 demodulation and the error detection/correction.

At step S41, N (out) and N (in) are calculated from data subjected to the error detection/correction at step S40.

At step S42, the offset value To is calculated to have the least sum of N (out) and N (in) by referring to the tracking offset reference table created at step S23 or created beforehand, and employing the sum of N(out) and N(in) per sector calculated at step S41. That is, when N (out) is 0 and N(in) is 5 so that the sum of N(out) and N(in) is 5, the corresponding point is searched from FIGS. 19A to 19C showing graphically the tracking offset reference table of FIG. 18, so that point E is found. The tracking offset value at that time is -0.01 µm, and the interval to the point D indicating the optimal tracking offset value is +0.03 µm. Accordingly, the optimal tracking offset value with the least sum of N (out) and N (in) is obtained by adding +0. 03 µm to the current tracking offset value.

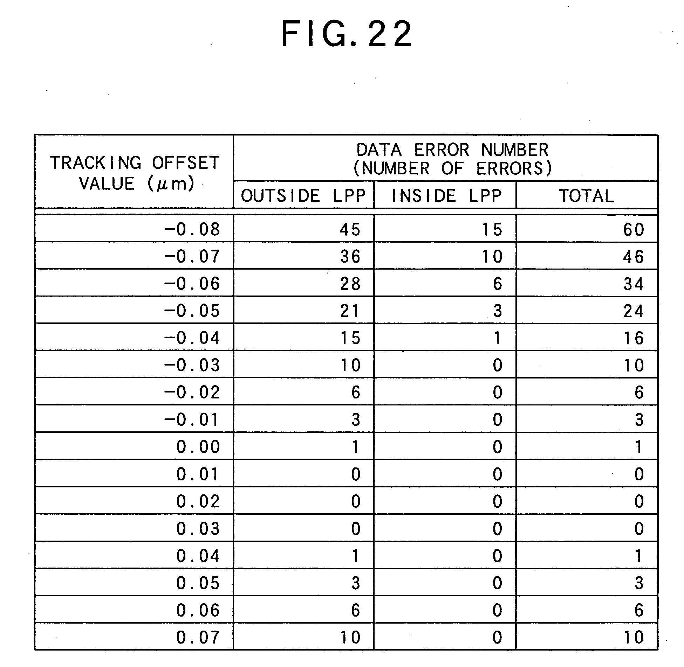

FIG. 22 shows the relationship between the tracking offset value and the number of data errors. The LPP as indicated in FIG. 22 is the LPP of the type as described in Patent Document 1.

The number of data errors as indicated in a column of inside LPP is the number of errors occurring with the positional relation between the information pit in FIG. 3 and the outside LPP at each tracking offset value when the tracking offset value (µm) is moved by every 0.01 µm, for example, from left to right in FIG. 3 in this embodiment.

When the tracking offset value is plus, the radiation area of light beam 12 is moved to the left in FIG. 3. If the tracking offset value is increased to the minus side, the trap of land inside the LPP to the groove is equivalently increased, so that part of the information pit formed at the LPP position is cut. Therefore, the level variation occurs with respect to the information pits formed at the positions without the LPP, increasing the number of data errors. On the contrary, when the tracking offset value is minus, the radiation area of light beam 12 is moved to the right in FIG. 3. If the tracking offset value is increased to the plus side, one part of the information pit is formed on the LPP, so that the level variation occurs with respect to the information pits formed at the positions without the LPP, increasing the number of data errors.

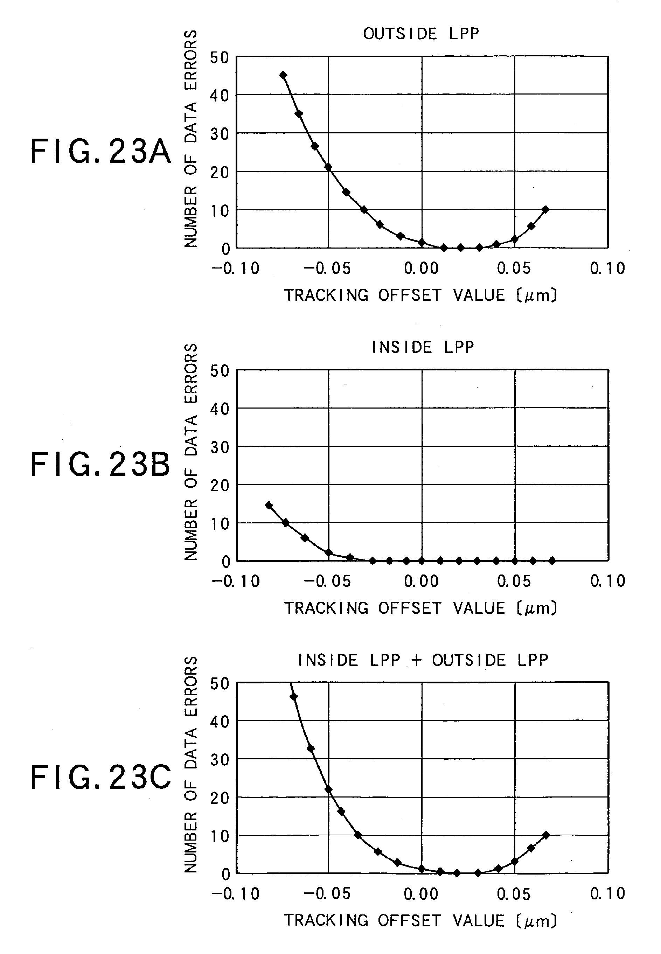

FIG. 23 is a graph showing the relationship between the tracking offset value and the number of data errors in FIG. 22.

FIG. 23A shows the number of data errors occurring in containing the outside LPP in the radiation area of light beam 12 at the set tracking offset value, FIG. 23B shows the number of data errors occurring in containing the inside LPP in the radiation area of light beam 12 at the set tracking offset value, and FIG. 23C shows the sum of the number of data errors occurring in FIGS. 23A and 23B.

From FIG. 23A, it will be found that the number of data errors is increased as the tracking offset value is greater in the plus or minus direction, when the outside LPP is contained in the radiation area of light beam 12. From FIG. 19B, it will be found that the number of data errors is increased as the tracking offset value is greater in the minus side for the inside LPP. Because the LPP of this type is formed at the position near the groove, and the inside LPP is farther away from the groove. From FIG. 19C, when the tracking offset value is 0.02 µm, the sum of the number of data errors is 0. When the tracking offset value is 0.01 µm and 0.03 µm, the sum of the number of data errors is 0. The optimal tracking offset value is set to their intermediate value, or 0.02 µm.

As described above, the occurrence number of errors in the regenerative signal containing the LPP in the radiation area of light beam 12 with the ECC is calculated for each tracking offset value by changing the tracking offset value, whereby the tracking offset value with the least occurrence number of errors in the regenerative signal containing the LPP in the radiation area of light beam 12 is searched.

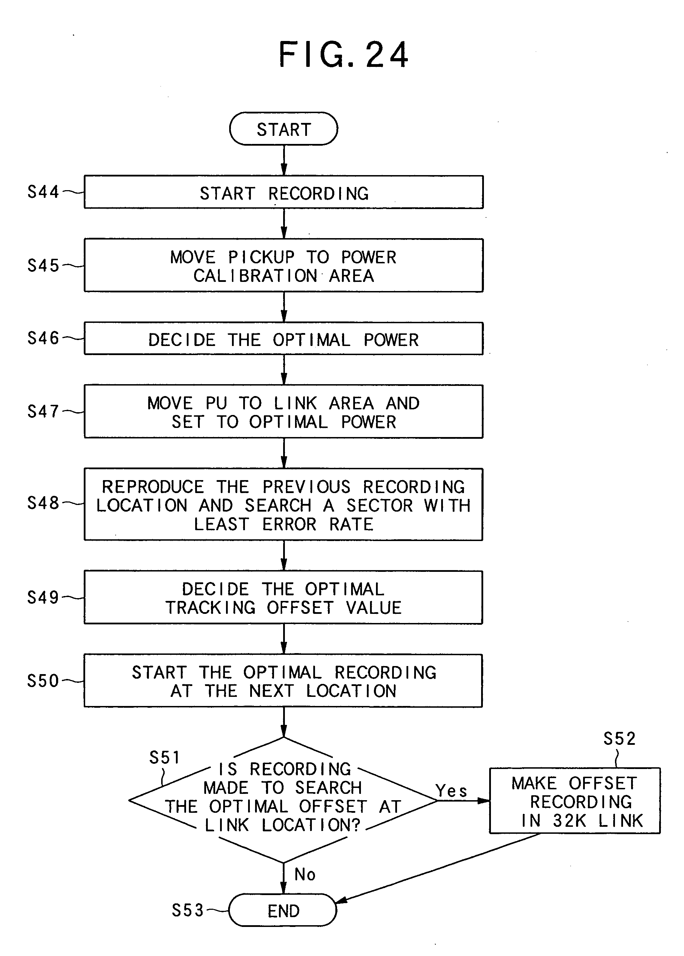

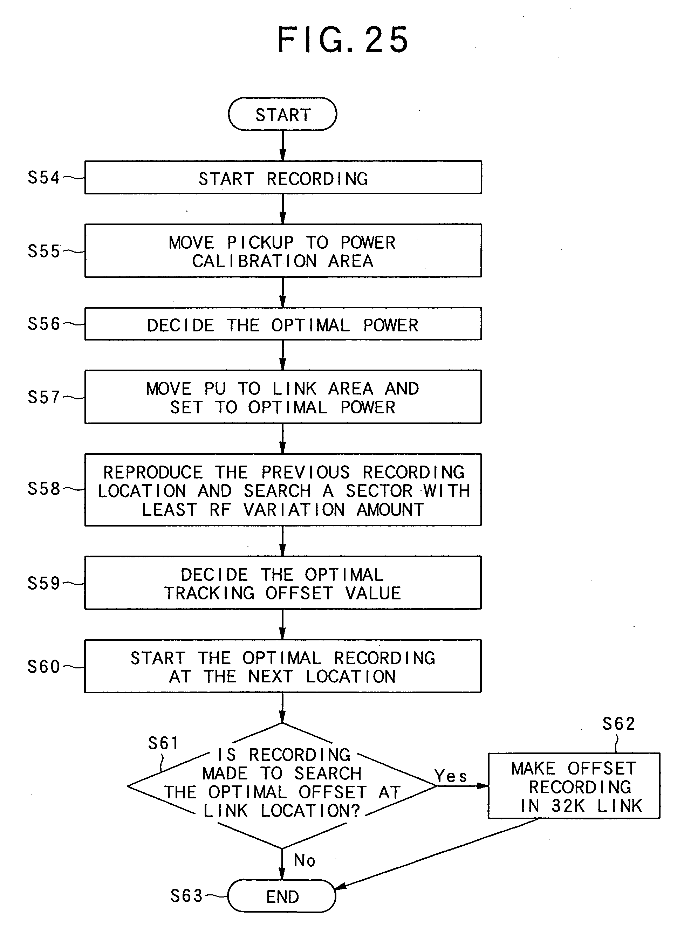

Referring to FIGS. 24 and 25, an instance where the optimal tracking offset value is detected in a linking area will be described below.

The linking area means the specific area to be provided on the optical disk 1 following the recorded area in which the continuous information to be recorded is recorded on the optical disk 1 till the next information to be recorded is recorded. Though the length of this linking area is arbitrarily set up, 32 kbytes (=1 ECC) is employed in this embodiment.

FIG. 24 shows a flowchart for detecting the optimal tracking offset value with the ECC in the linking area and recording the data to be recorded.

At step S44, detecting the optimal tracking offset value and recording the data are started.

At step S45, the optical pickup 2 is moved to the power calibration area.

At step S46, the optimal value of the intensity of light beam 12 radiated from the optical pickup 2 is decided in the power calibration area. When the power calibration is completed in mounting the disk, the steps S45 and S46 are unnecessary.

At step S47, the optimal power obtained at step S46 is set up as the power to record the information pits.

At step S48, among 16 tracking offset steps recorded in the linking area, the step is calculated at which the sum of the number of errors occurring in containing the inside LPP in the radiation area of light beam 12 and the number of errors occurring in containing the outside LPP in the radiation area of light beam 12 is the smallest.

At step S49, the tracking offset value at which the occurrence number of errors is the smallest at step S48 is decided and set up as the optimal tracking offset value.

At step S50, data to be recorded employing the tracking offset value decided at step S49 is recorded in an unrecorded area continued from the linking area on the optical disk 1.

At step S51, it is determined whether or not the recording is performed to search the optimal tracking offset value in another linking area again. If the recording is not performed to search the optimal tracking offset value, the operation goes to step S53, or if the recording is performed to search the optimal tracking offset value, the operation transfers to step S52.

At step S52, the optical pickup 2 is moved to the unrecorded area next to the last recorded area performed at step S50, and the information pits are formed over a plurality of continuous sectors by changing the tracking offset value, employing the optimal power decided at step S46. The tracking offset value may be changed at a regular interval in a range between groove tracks. Herein, the tracking offset value is changed at 16 steps by every 0.01 µm from -0.08 µm to +0.07 µm to form the information pits. At this time, the distance over which the information pits are formed per tracking offset value is optional, but herein, the information pits are formed over one sector, for example. That is, the tracking offset value is changed at a step of 0.01 µm from -0.08 µm to +0.07 µm to record the information encoded with the ECC based on any signal pattern in one ECC block of the optical disk 1. At this time, one sector is recorded per tracking offset value. Accordingly, 16 sectors are employed for 16 tracking offset steps from -0.08 µm to +0.07 µm. Since one ECC block is composed of 16 sectors, the error detection is made after the regenerative signal of reproducing the formed information pit is decoded.

At step S53, the recording with the optimal tracking offset value is ended, because there is no data to be recorded.

FIG. 25 shows a flowchart for detecting the optimal tracking offset value employing the variations of amplitude value of RF signal in the linking area and recording the data to be recorded.

At step S54, detecting the optimal tracking offset value and recording the data are started.

At step S55, the optical pickup 2 is moved to the power calibration area.

At step S56, the optimal value of the power of light radiated from the optical pickup 2 is decided in the power calibration area. When the power calibration is completed in mounting the disk, the steps S55 and S56 are unnecessary.

At step S57, the optimal power obtained at step S56 is set up as the power to record the information pits.

At step S58, of 16 tracking offset steps recorded in the linking area, the step is calculated at which the variation amount between the bottom value of regenerative signal amplitude due to influence of the inside LPP and the outside LPP and the bottom value of regenerative signal amplitude not containing the LPP in the radiation area of light beam 12 is the smallest.

At step S59, the tracking offset value at which the bottom value of regenerative signal amplitude is the smallest at step S58 is decided and set up as the optimal tracking offset value.

At step S60, data to be recorded employing the tracking offset value decided at step S59 is recorded in an unrecorded area continued from the linking area on the optical disk 1.

At step S61, it is determined whether or not the recording is performed to search the optimal offset value in another linking area again. If the recording is not performed to search the optimal tracking offset value, the operation goes to step S63, or if the recording is performed to search the optimal tracking offset value, the operation transfers to step S62.

At step S62, the optical pickup 2 is moved to the unrecorded area next to the recorded area performed at step S60, and the information pits are formed over a plurality of continuous sectors by changing the tracking offset value, employing the optimal power decided at step S56. The tracking offset value may be changed at a regular interval in a range between groove tracks. Herein, the tracking offset value is changed at 16 steps by every 0.01 µm from -0.08 µm to +0.07 µm to form the information pits. At this time, the distance over which the information pits are formed per tracking offset value is optional, but herein, the information pits are formed over one sector, for example. That is, the tracking offset value is changed at a step of 0.01 µm from -0.08 µm to +0.07 µm to record the information encoded with the ECC based on any signal pattern in one ECC block of the optical disk 1. At this time, one sector is recorded per tracking offset value. Accordingly, 16 sectors are employed for 16 tracking offset steps from-0.08 µm to +0.07 µm. Since one ECC block is composed of 16 sectors, the error detection is made after the regenerative signal of reproducing the formed information pits is decoded.

At step S63, the recording with the optimal tracking offset value is ended, because there is no data to be recorded.

As described above, the optimal tracking offset value is detected in the linking area of the optical disk 1, making the user unaware of the waiting time for detecting the optimal tracking offset value when the optimal tracking offset value is detected.

In the tracking servo control device with this configuration, the tracking offset value is changed using the regenerative signal based on the reflected light of light beam from the optical disk when at least one part of the LPP is formed in the radiation range of light beam, and the regenerative signal based on the reflected light when the LPP is formed outside the radiation range, whereby the tracking servo control device in which the regenerative signal has the least occurrence number of errors is constituted.

Also, the tracking offset value is changed to have the least variation in the amplitude between the regenerative signal based on the reflected light of light beam from the optical disk when at least one part of the LPP is formed in the radiation range of light beam and the regenerative signal based on the reflected light when the LPP is formed outside the radiation area, whereby the tracking servo control device in which the regenerative signal has the least occurrence number of errors is constituted, employing the tracking offset value.

Moreover, the tracking offset value is changed to have the least variation in the bottom value between the regenerative signal based on the reflected light of light beam from the optical disk when at least one part of the LPP is formed in the radiation range of light beam and the regenerative signal based on the reflected light when the LPP is formed outside the radiation area, whereby the tracking servo control device in which the regenerative signal has the least occurrence number of errors in is constituted.

Moreover, the tracking offset value is changed to have the least variation in the bottom and peak values between the regenerative signal based on the reflected light of light beam from the optical disk when at least one part of the LPP is formed in the radiation range of light beam and the regenerative signal based on the reflected light when the LPP is formed outside the radiation area, whereby the tracking servo control device in which the regenerative signal has the least occurrence number of errors when the amplitude of the regenerative signal is not changed is constituted.

Moreover, the tracking offset value is changed to have the least sum of the number of errors occurring in the regenerative signal based on the reflected light of light beam from the optical disk when at least one part of the LPP is formed in the radiation range of light beam and the number of errors occurring in the regenerative signal based on the reflected light when the LPP is formed outside the radiation range, whereby the tracking servo control device in which the regenerative signal has the least occurrence number of errors is constituted, employing the tracking offset value.

In the tracking servo control device with this configuration, the tracking offset value is changed, employing the regenerative signal based on the reflected light from the optical disk when at least one part of the LPP adjacent to the information pit in one direction is formed in the radiation area of light beam, and the regenerative signal based on the reflected light from the optical disk when at least one part of the LPP adjacent to information pit in the other direction is formed, whereby the tracking servo control device in which the regenerative signal has the least occurrence number of errors is constituted.

Also, the tracking offset value is changed to have the least variation in the amplitude between the regenerative signal based on the reflected light of light beam from the optical disk when at least one part of the LPP adjacent to the information pit in one direction is formed in the radiation range of light beam and the regenerative signal based on the reflected light from the optical disk when at least one of the LPP adjacent in the other direction is formed, whereby the tracking servo control device in which the regenerative signal is associated wit the least occurrence number of errors is constituted, employing the tracking offset value.

Moreover, the tracking offset value is set up so that the average value of the variation amount in the peak value between the regenerative signal based on the reflected light of light beam from the optical disk when at least one part of the LPP adjacent to the information pit in one direction is formed in the radiation range of light beam and the regenerative signal based on the reflected light from the optical disk when at least one part of the LPP adjacent in the other direction is formed may be the smallest with respect to the peak value of the regenerative signal in the case of not containing the LPP within the radiation range of light beam, whereby the tracking servo control device in which the regenerative signal has the least occurrence number of errors is constituted.

Moreover, the tracking offset value is set up so that the average value of the variation amount in the peak and bottom values between the regenerative signal based on the reflected light of light beam from the optical disk when at least one part of the LPP adjacent to the information pit in one direction is formed in the radiation range of light beam and the regenerative signal based on the reflected light from the optical disk when at least one part of the LPP adj acent in the other direction is formed may be the smallest with respect to the peak and bottom values of the regenerative signal in the case of not containing the LPP in the radiation range of light beam, whereby the tracking servo control device in which the regenerative signal has the least occurrence number of errors is constituted.

Moreover, the tracking offset value is changed to have the least sum of the number of errors occurring in the regenerative signal based on the reflected light of light beam from the optical disk when at least one part of the LPP adjacent to the information pit in one direction is formed in the radiation range of light beam and the number of errors occurring in the regenerative signal based on the reflected light from the optical disk when at least one part of the LPP adjacent in the other direction is formed, whereby the tracking servo control device in which the regenerative signal has the least occurrence number of errors is constituted, employing the tracking offset value.

In the tracking servo control device with this configuration, the optimal tracking offset value is detected at high speed.

Also, the optimal tracking offset is performed, making the user unaware of the time for detecting the optimal tracking offset value.

Moreover, when the tracking servo control device is started, the optimal tracking offset value is detected. Also, the optimal tracking offset value is detected, irrespective of whether the write-once medium or the recording medium.

Moreover, the ECC may be employed to detect the optimal tracking offset value, whereby the optimal tracking offset value is detected with the simpler configuration.

Moreover, since the formation pattern of information pit is constant, the optimal tracking offset value is easily detected.

With this configuration, the information recording dedicated apparatus or the information recording and reproducing apparatus can detect the optimal tracking offset value.

With the method of this invention, the tracking offset value is changed, employing the regenerative signal based on the reflected light from the optical disk when at least one part of the LPP is formed in the radiation area of light beam, and the regenerative signal based on the reflected light when the LPP is formed outside the radiation area, whereby the tracking servo control method in which the regenerative signal has the least occurrence number of errors is provided.

Also, with the method of this invention, the tracking offset value is changed, employing the regenerative signal based on the reflected light from the optical disk when at least one part of the LPP adjacent to the information pit in one direction is formed in the radiation area of light beam, and the regenerative signal based on the reflected light from the optical disk when at least one part of the LPP adjacent in the other direction is formed, whereby the tracking servo control method in which the regenerative signal has the least occurrence number of errors is provided.

With the method of this invention, the tracking servo control method for detecting the optimal tracking offset value is provided for the information recording dedicated apparatus or the information recording and reproducing apparatus.

With the program of this invention, the tracking offset value is changed, employing the regenerative signal based on the reflected light of light beam from the optical disk when at least one part of the LPP is formed in the radiation area of light beam, and the regenerative signal based on the reflected light when the LPP is formed outside the radiation area, whereby the tracking servo control program in which the regenerative signal has the least occurrence number of errors is provided.

Also, with the program of this invention, the tracking offset value is changed, employing the regenerative signal based on the reflected light from the optical disk when at least one part of the LPP adjacent to the information pit in one direction is formed in the radiation area of light beam, and the regenerative signal based on the reflected light from the optical disk when at least one part of the LPP adjacent in the other direction is formed, whereby the tracking servo control program in which the regenerative signal has the least occurrence number of errors is provided.

With the program of this invention, the tracking servo control program for detecting the optimal tracking offset value is provided for the information reproducing dedicated apparatus.

With the program of this invention, the tracking servo control program for detecting the optimal tracking offset value is provided for the information recording dedicated apparatus or the information recording and reproducing apparatus.

The program of this invention may be recorded before hand in the information recording medium such as a flexible disk, or distributed via a network such as the Internet and recorded, and read and executed by the general-purpose microcomputer, whereby the general-purpose microcomputer may be operated as the microcomputer 9 of the embodiments.

## Claims

1. A tracking servo control device for making a tracking servo control to apply a light beam onto a groove track on a recording medium where the groove track and a pre-pit are preformed, comprising:
a first generation device which generates a first regenerative signal based on a reflected light from the recording medium when at least a part of the pre-pit is formed within a radiation range of the light beam onto the groove track;
a second generation device which generates a second regenerative signal based on a reflected light from the recording medium when the pre-pit is formed outside the radiation range of the light beam; and
a calculation device which calculates an offset value in the tracking servo control based on the first regenerative signal and the second regenerative signal that are generated.

2. The tracking servo control device according to claim 1, wherein the calculation device calculates the offset value so that a difference between the amplitude value of the first regenerative signal and the amplitude value of the second regenerative signal is minimized.

3. The tracking servo control device according to claim 1 or 2, wherein the calculation device calculates the offset value so that a difference between the lower peak value of the first regenerative signal and the lower peak value of the second regenerative signal is minimized.

4. The tracking servo control device according to any one of claims 1 to 3, wherein the calculation device calculates the offset value so that a difference between the upper peak value of the first regenerative signal and the upper peak value of the second regenerative signal is minimized.

5. The tracking servo control device according to any one of claims 1 to 4, wherein the calculation device calculates the offset value so that the sumof an error count of information obtained from the first regenerative signal and an error count of information obtained from the second regenerative signal is minimized.

6. A tracking servo control device for making a tracking servo control to apply a light beam onto a groove track on a recording medium where the groove track and a pre-pit are preformed, comprising:
a first generation device which generates a first regenerative signal based on a reflected light from the recording medium when at least a part of the pre-pit adjacent to the information pit in one direction is formed within a radiation range of the light beam onto the groove track;
a second generation device which generates a second regenerative signal based on a reflected light from the recording medium when at least a part of the pre-pit adjacent to the information pit in another direction is formed within the radiation range of the light beam; and
a calculation device which calculates an offset value in the tracking servo control based on the first regenerative signal and the second regenerative signal that are generated.

7. The tracking servo control device according to claim 6, wherein the calculation device calculates the offset value so that a difference between the amplitude value of the first regenerative signal and the amplitude value of the second regenerative signal is minimized.

8. The tracking servo control device according to claim 6 or 7, further comprising a third generation device for generating a third regenerative signal based on a reflected light from the recording medium for the light beam when the pre-pit is formed outside the radiation range of the light beam, wherein the control device calculates the offset value so that a difference between the upper peak value of the third regenerative signal and an average value of the upper peak value of the first regenerative signal and the upper peak value of the second regenerative signal is minimized.

9. The tracking servo control device according to claim 6 or 7, further comprising a third generation device for generating a third regenerative signal based on a reflected light from the recording medium for the light beam when the pre-pit is formed outside the radiation range of the light beam, wherein the calculation device calculates the offset value so that a difference between the lower peak value of the third regenerative signal and an average value of the lower peak value of the first regenerative signal and the lower peak value of the second regenerative signal is minimized.

10. The tracking servo control device according to claim 8, wherein the calculation device calculates the offset value so that a difference between the lower peak value of the third regenerative signal and an average value of the lower peak value of the first regenerative signal and the lower peak value of the second regenerative signal is minimized.

11. The tracking servo control device according to any one of claims 6 to 10, wherein the calculation device calculates the offset value so that the sum of an error count of data obtained from the first regenerative signal and an error count of data obtained from the second regenerative signal is minimized.

12. The tracking servo control device according to any one of claims 1 to 11, wherein the calculation of the offset value by the calculation device is made employing the information pits formed in a continuous area where the information pits are formed.

13. The tracking servo control device according to any one of claims 1 to 12, wherein the calculation of the offset value by the calculation device is made employing the information pits formed in a linking area of the recording medium.

14. The tracking servo control device according to any one of claims 1 to 13, wherein the calculation of the offset value by the calculation device is made employing the information pits formed in a preset area for adjusting the light quantity of the light beam.

15. The tracking servo control device according to any one of claims 1 to 14, wherein the calculation of the offset value by the calculation device is made employing the information pits formed in one area of the recording medium where the information pits are formed, the information pits being subjected to an error detection/correction with an error detection/correction code.

16. The tracking servo control device according to any one of claims 1 to 15, wherein the formation pattern of the information pit is constant.

17. The tracking servo control device according to any one of claims 1 to 16, wherein the information pit is employed for recording the information recorded with an error detection/correction code, and the position of the information pit on the recording medium is specified by the error detection/correction code.

18. A tracking servo control method for making a tracking servo control to apply a light beam onto a groove track on a recording medium where the groove track and a pre-pit are preformed, comprising:
a first generation step of generating a first regenerative signal based on a reflected light from the recording medium when at least a part of the pre-pit is formed within a radiation range of the light beam onto the groove track;
a second generation step of generating a second regenerative signal based on a reflected light from the recording medium when the pre-pit is formed outside the radiation range of the light beam; and
a calculation step of calculating an offset value in the tracking servo control based on the first regenerative signal and the second regenerative signal that are generated.

19. A tracking servo control method for making a tracking servo control to apply a light beam onto a groove track on a recording medium where the groove track and a pre-pit are preformed, comprising:
a first generation step of generating a first regenerative signal based on a reflected light from the recording medium when at least a part of the pre-pit adjacent to the information pit in one direction is formed within a radiation range of the light beam onto the groove track;
a second generation step of generating a second regenerative signal based on a reflected light from the recording medium when the pre-pit adjacent to the information pit in the other direction is formed within the radiation range of the light beam; and
a calculation step of calculating an offset value in the tracking servo control based on the first regenerative signal and the second regenerative signal that are generated.

20. A tracking servo control program for a tracking servo control device for making a tracking servo control to apply a light beam onto a groove track on a recording medium where the groove track and a pre-pit are preformed, the program makes a computer contained in the tracking servo control device function as:
a first generation device for generating a first regenerative signal based on a reflected light from the recording medium when at least a part of the pre-pit is formed within a radiation range of the light beam onto the groove track;
a second generation device for generating a second regenerative signal based on a reflected light from the recording medium when the pre-pit is formed outside the radiation range of the light beam; and
a calculation device for calculating an offset value in the tracking servo control based on the first regenerative signal and the second regenerative signal that are generated.

21. A tracking servo control program for a tracking servo control device for making a tracking servo control to apply a light beam onto a groove track on a recording medium where the groove track and a pre-pit are preformed, the program makes a computer contained in the tracking servo control device function as:
a first generation device for generating a first regenerative signal based on a reflected light from the recording medium when at least a part of the pre-pit adjacent to the information pit in one direction is formed within a radiation range of the light beam onto the groove track;
a second generation device for generating a second regenerative signal based on a reflected light from the recording medium when the pre-pit adjacent to the information pit in the other direction is formed within the radiation range of the light beam; and
a calculation device for calculating an offset value in the tracking servo control based on the first regenerative signal and the second regenerative signal that are generated.
